(19) **Europäisches Patentamt**
**European Patent Office**
**Office européen des brevets**

(11) **EP 4 598 137 A1**

(12) **EUROPEAN PATENT APPLICATION**
published in accordance with Art. 153(4) EPC

(43) Date of publication:
**06.08.2025  Bulletin 2025/32**

(21) Application number: **23872944.6**

(22) Date of filing: **21.09.2023**

(51) International Patent Classification (IPC):
**H04W 48/10** (2009.01)       **H04W 72/232** (2023.01)
**H04W 72/04** (2023.01)

(52) Cooperative Patent Classification (CPC):
**H04W 48/10; H04W 72/04; H04W 72/232**

(86) International application number:
**PCT/KR2023/014369**

(87) International publication number:
**WO 2024/071827 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022  US 202263411601 P**

(71) Applicant: **LG Electronics Inc.**
**Yeongdeungpo-gu**
**Seoul 07336 (KR)**

(72) Inventors:
• **KIM, Jaehyung**
**Seoul 06772 (KR)**
• **LEE, Youngdae**
**Seoul 06772 (KR)**
• **YANG, Suckchel**
**Seoul 06772 (KR)**
• **LEE, Sunghoon**
**Seoul 06772 (KR)**

(74) Representative: **Plasseraud IP**
**104 Rue de Richelieu**
**CS92104**
**75080 Paris Cedex 02 (FR)**

(54) **METHOD FOR TRANSMITTING AND RECEIVING SYSTEM INFORMATION AND DEVICE THEREOF IN WIRELESS COMMUNICATION SYSTEM**

(57)      A method performed by a terminal according to an embodiment of the present disclosure comprises the steps of: receiving an MIB from a base station; receiving a PDCCH from the base station on the basis of the MIB; and receiving a PDSCH from the base station. The PDSCH is related to an SIB1. A frequency band related to the PDSCH is determined on the basis of i) DCI, ii) a control resource set (CORESET) configured on the basis of the MIB, or iii) a synchronization signal/physical broadcast channel block (SSB).

【FIG. 7】

```
            Start

       Receive MIB        — S710

       Receive PDCCH      — S720

       Receive PDSCH      — S730

             End
```

**Description**

[TECHNICAL FIELD]

The present disclosure relates to a method for transmitting and receiving system information and a device thereof in a wireless communication system.

[BACKGROUND]

Mobile communication systems have been developed to provide a voice service while ensuring the activity of a user. However, in the mobile communication system, not only a voice, but also a data service is extended. At present, there is a shortage of resources due to an explosive increase in traffic, and users demand a higher speed service. As a result, a more advanced mobile communication system is required.

Requirements for a next-generation mobile communication system should be able to support the acceptance of explosive data traffic, a dramatic increase in the per-user data rate, the acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

In Rel-18, an NR enhanced Reduced Capability (eRedCap) UE featuring a further reduced maximum UE bandwidth (e.g., 5 MHz) will be introduced.

Compared to the existing RedCap UE of Rel-17, the eRedCap UE introduced in Rel-18 can process up to 5 MHz BW in the case of shared channels (PDSCH/PUSCH). However, the eRedCap UE can process up to 20 MHz for physical signals and control channels (PDCCH/PUCCH). Additionally, the eRedCap UE is allowed to schedule bandwidths larger than 5 MHz BW only for some broadcast PDSCHs during an initial connection process.

[DISCLOSURE]

[TECHNICAL PROBLEM]

PDSCH related to SIB1 is transmitted based on 20 MHz, which is a band of CORESET#0. However, since an eRedCap UE may process up to 5 MHz for PDSCH, it is ambiguous from the eRedCap UE's perspective as to where within 20 MHz the PDSCH is received. Therefore, the following problem occurs. The eRedCap UE performs post-FFT RE buffering for 20MHz for SIB1 reception, and this post-FFT RE buffering increases UE complexity.

The present disclosure provides a method which may minimize UE complexity required for transmitting and receiving system information related to an eRedCap UE.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) in a wireless communication system according to an embodiment of the present disclosure comprises receiving, from a base station, a master information block (MIB), receiving, from the base station, a physical downlink control channel (PDCCH) based on the MIB, and receiving a physical downlink shared channel (PDSCH) from the base station.

The PDCCH is related to downlink control information (DCI) for scheduling the PDSCH. The PDSCH is related to system information block 1 (SIB1).

i) a first bandwidth related to a control channel and ii) a second bandwidth related to a shared channel are supported by the UE. The second bandwidth is smaller than the first width.

A frequency band related to the PDSCH is determined based on i) the DCI, ii) a control resource set (CORESET) configured based on the MIB, or iii) a synchronization signal/physical broadcast channel block (SSB).

Based on the frequency band related to the PDSCH being determined based on the DCI, the PDSCH may be received at a time after a time gap from a time of receiving the PDCCH.

The time gap may include a time for decoding the DCI.

The DCI may include a time domain resource assignment field. A slot offset K0 and a starting symbol S may be determined based on the time domain resource assignment field. A time interval based on the slot offset K0 and the starting symbol S may be larger than or equal to the time gap.

The K0 may represent a number of slots between a slot related to the DCI and a slot related to the PDSCH. The S may represent an index of a first symbol related to the PDSCH in the slot related to the PDSCH.

The UE may not perform an operation related to reception of the SIB1 during the time gap from the time of receiving the PDCCH.

The frequency band related to the PDSCH may be determined based on i) a resource block (RB) of the CORESET or ii) a center frequency of the CORESET.

The RB may be an RB with a highest RB index or a lowest RB index among RBs related to the CORESET.

The frequency band related to the PDSCH may be determined based on a resource block (RB) of the SSB or a center frequency of the SSB.

The RB may be an RB with a highest RB index or a lowest RB index among RBs related to the SSB.

The DCI may include information for the frequency band related to the PDSCH.

A user equipment (UE) operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include receiving, from a base station, a master information block (MIB), receiving, from the base station, a physical downlink control channel (PDCCH) based on the MIB, and receiving a physical downlink shared channel (PDSCH) from the base station.

The PDCCH is related to downlink control information (DCI) for scheduling the PDSCH. The PDSCH is related to system information block 1 (SIB1).

i) a first bandwidth related to a control channel and ii) a second bandwidth related to a shared channel are supported by the UE. The second bandwidth is smaller than the first width.

A frequency band related to the PDSCH is determined based on i) the DCI, ii) a control resource set (CORESET) configured based on the MIB, or iii) a synchronization signal/physical broadcast channel block (SSB).

A device according to another embodiment of the present disclosure comprises one or more memories and one or more processors functionally connected to the one or more memories.

The one or more memories include instructions of configuring the one or more processors to perform operations based on being executed by the one or more processors.

The operations include receiving, from a base station, a master information block (MIB), receiving, from the base station, a physical downlink control channel (PDCCH) based on the MIB, and receiving a physical downlink shared channel (PDSCH) from the base station.

The PDCCH is related to downlink control information (DCI) for scheduling the PDSCH. The PDSCH is related to system information block 1 (SIB1).

i) a first bandwidth related to a control channel and ii) a second bandwidth related to a shared channel are supported by the UE. The second bandwidth is smaller than the first width.

A frequency band related to the PDSCH is determined based on i) the DCI, ii) a control resource set (CORESET) configured based on the MIB, or iii) a synchronization signal/physical broadcast channel block (SSB).

One or more non-transitory computer-readable media according to another embodiment of the present disclosure store one or more instructions.

One or more instructions executable by one or more processors configure the one or more processors to perform operations.

The operations include receiving, from a base station, a master information block (MIB), receiving, from the base station, a physical downlink control channel (PDCCH) based on the MIB, and receiving a physical downlink shared channel (PDSCH) from the base station.

The PDCCH is related to downlink control information (DCI) for scheduling the PDSCH. The PDSCH is related to system information block 1 (SIB1).

i) a first bandwidth related to a control channel and ii) a second bandwidth related to a shared channel are supported by the UE. The second bandwidth is smaller than the first width.

A frequency band related to the PDSCH is determined based on i) the DCI, ii) a control resource set (CORESET) configured based on the MIB, or iii) a synchronization signal/physical broadcast channel block (SSB).

A method performed by a base station in a wireless communication system according to another embodiment of the present disclosure comprises transmitting a master information block (MIB) to a UE, transmitting, to the UE, a physical downlink control channel (PDCCH) based on the MIB, and transmitting a physical downlink shared channel (PDSCH) to the UE.

The PDCCH is related to downlink control information (DCI) for scheduling the PDSCH. The PDSCH is related to system information block 1 (SIB1).

i) a first bandwidth related to a control channel and ii) a second bandwidth related to a shared channel are supported by the UE. The second bandwidth is smaller than the first width.

A frequency band related to the PDSCH is determined based on i) the DCI, ii) a control resource set (CORESET) configured based on the MIB, or iii) a synchronization signal/physical broadcast channel block (SSB).

A base station operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include transmitting a master information block (MIB) to a UE, transmitting, to the UE, a physical downlink control channel (PDCCH) based on the MIB, and transmitting a physical downlink shared channel (PDSCH) to the UE.

The PDCCH is related to downlink control information (DCI) for scheduling the PDSCH. The PDSCH is related to system information block 1 (SIB1).

i) a first bandwidth related to a control channel and ii) a second bandwidth related to a shared channel are supported by the UE. The second bandwidth is smaller than the first width.

A frequency band related to the PDSCH is determined based on i) the DCI, ii) a control resource set (CORESET) configured based on the MIB, or iii) a synchronization signal/physical broadcast channel block (SSB).

[ADVANTAGEOUS EFFECTS]

According to an embodiment of the present disclosure, since the location of the PDSCH frequency band is indicated or predefined, the eRedCap UE does not need to perform post-FFT RE buffering for the entire 20 MHz. Therefore, the cost/implementation complexity required to receive system information from the eRedCap UE can be reduced. In addition, since SIB1 is transmitted based on the indicated/defined band rather than the entire 20MHz, frequency resource utilization can be improved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates an example of a frame structure in an NR system.
FIG. 2 illustrates an example of a resource grid in NR.
FIG. 3 illustrates physical channels and general signal transmission used in a 3GPP system.
FIG. 4 is a diagram illustrating an SSB structure to which a method proposed in the present disclosure is applicable.
FIG. 5 illustrates SSB transmission to which a method proposed in the present disclosure is applicable.
FIG. 6 illustrates a system information (SI) acquisition process.
FIG. 7 is a flowchart for describing a method performed by a user equipment (UE) according to an embodiment of the present disclosure.
FIG. 8 is a flowchart for describing a method performed by a base station according to another embodiment of the present disclosure.
FIG. 9 is a diagram illustrating a configuration of a first device and a second device according to an embodiment of the present disclosure.

[DETAILED DESCRIPTION]

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various radio access system including CDMA, FDMA, TDMA, OFDMA, SC-FDMA, and the like. The CDMA may be implemented as radio technology such as Universal Terrestrial Radio Access (UTRA) or CDMA2000. The TDMA may be implemented as radio technology such as a global system for mobile communications (GSM)/general packet radio service (GPRS)/enhanced data rates for GSM evolution (EDGE). The OFDMA may be implemented as radio technology such as Institute of Electrical and Electronics Engineers (IEEE) 802.11 (Wi-Fi), IEEE 802.16 (WiMAX), IEEE 802.20, Evolved UTRA (E-UTRA), or the like. The UTRA is a part of Universal Mobile Telecommunications System (UMTS). 3rd Generation Partnership Project (3GPP) Long Term Evolution (LTE) is a part of Evolved UMTS (E-UMTS) using the E-UTRA and LTE-Advanced (A)/LTE-A pro is an evolved version of the 3GPP LTE. 3GPP NR (New Radio or New Radio Access Technology) is an evolved version of the 3GPP LTE/LTE-A/LTE-A pro.

For clarity of description, the technical spirit of the present disclosure is described based on the 3GPP communication system (e.g., LTE-A or NR), but the technical spirit of the disclosure is not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a detailed standard document number. The LTE/NR may be collectively referred to as the 3GPP system.

Matters disclosed in a standard document opened before the disclosure may be referred to for a background art, terms, omissions, etc., used for describing the disclosure. For example, the following documents may be referred to.

3GPP NR

- 3GPP TS 38.211: Physical channels and modulation
- 3GPP TS 38.212: Multiplexing and channel coding
- 3GPP TS 38.213: Physical layer procedures for control
- 3GPP TS 38.214: Physical layer procedures for data
- 3GPP TS 38.215: Physical layer measurements
- 3GPP TS 38.300: NR and NG-RAN Overall Description
- 3GPP TS 38.304: User Equipment (UE) procedures in idle mode and in RRC inactive state
- 3GPP TS 38.321: Medium Access Control (MAC) protocol
- 3GPP TS 38.322: Radio Link Control (RLC) protocol
- 3GPP TS 38.323: Packet Data Convergence Protocol (PDCP)
- 3GPP TS 38.331: Radio Resource Control (RRC) protocol
- 3GPP TS 37.324: Service Data Adaptation Protocol (SDAP)
- 3GPP TS 37.340: Multi-connectivity; Overall description
- 3GPP TS 23.287: Application layer support for V2X services; Functional architecture and information flows
- 3GPP TS 23.501: System Architecture for the 5G System
- 3GPP TS 23.502: Procedures for the 5G System
- 3GPP TS 23.503: Policy and Charging Control Framework for the 5G System; Stage 2
- 3GPP TS 24.501: Non-Access-Stratum (NAS) protocol for 5G System (5GS); Stage 3
- 3GPP TS 24.502: Access to the 3GPP 5G Core Network (5GCN) via non-3GPP access networks
- 3GPP TS 24.526: User Equipment (UE) policies for 5G System (5GS); Stage 3

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. The introduction of next generation radio access technology considering enhanced mobile broadband communication (eMBB), massive MTC (mMTC), ultra-reliable and low latency communication (URLLC) is discussed, and in the disclosure, the technology is called new RAT for convenience. The NR is an expression representing an example of 5G radio access technology (RAT).

In a new RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. Different numerologies may be defined by scaling reference subcarrier spacing to an integer N.

## New Rat (NR) Numerology and Frame Structure

In the NR system, multiple numerologies may be supported. The numerologies may be defined by subcarrier spacing and a cyclic prefix (CP) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1. $\mu$ for a bandwidth part and the cyclic prefix are obtained from RRC parameters provided by the BS.

[Table 1]

| $\mu$ | $\triangle f = 2^{\mu}*15$ [kHz] | Cyclic Prefix (CP) |
|---|---|---|
| 0 | 15 | Normal |
| 1 | 30 | Normal |
| 2 | 60 | Normal, Extended |
| 3 | 120 | Normal |
| 4 | 240 | Normal |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band is defined as two types of frequency ranges FR1 and FR2. FR1 may denote sub 6 GHz range, and FR2 may denote above 6 GHz range and may mean millimeter wave (mmW).

Table 2 below shows an example of definition of the NR frequency band.

[Table 2]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

Regarding a frame structure in the NR system, a size of various fields in the time domain is expressed as a multiple of a time unit of $T_s = 1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ ms. In this case, there may be a set of UL frames and a set of DL frames.

Uplink frame number i for transmission from a user equipment (UE) shall start $T_{TA} = N_{TA} T_s$ before the start of a corresponding downlink frame at the corresponding UE.

Regarding the numerology μ, slots are numbered in increasing order of $n_{\text{s}}^{\mu} \in \left\{ 0,..., N_{\text{subframe}}^{\text{slots},\,\mu} - 1 \right\}$ within a subframe and are numbered in increasing order of $n_{\text{s,f}}^{\mu} \in \left\{ 0,..., N_{\text{frame}}^{\text{slots},\,\mu} - 1 \right\}$ within a radio frame. One slot consists of consecutive OFDM symbols of $N_{\text{symb}}^{\mu}$, and $N_{\text{symb}}^{\mu}$ is determined depending on a numerology used and slot configuration. The start of slots $n_{\text{s}}^{\mu}$ in a subframe is aligned in time with the start of OFDM symbols $n_{\text{s}}^{\mu} N_{\text{symb}}^{\mu}$ in the same subframe.

Not all UEs are able to transmit and receive at the same time, and this means that not all OFDM symbols in a downlink slot or an uplink slot are available to be used.

Table 3 represents the number $N_{\text{symb}}^{\text{slot}}$ of OFDM symbols per slot, the number $N_{\text{slot}}^{\text{frame},\,\mu}$ of slots per radio frame, and the number $N_{\text{slot}}^{\text{subframe},\,\mu}$ of slots per subframe in a normal CP. Table 4 represents the number of OFDM symbols per slot, the number of slots per radio frame, and the number of slots per subframe in an extended CP.

[Table 3]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

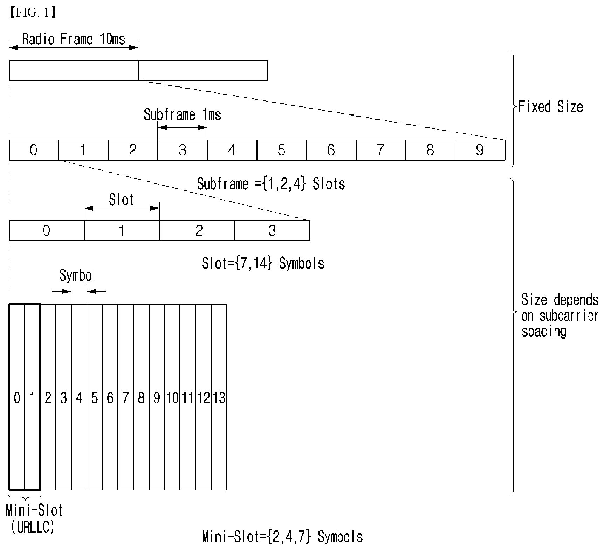

FIG. 1 illustrates an example of a frame structure in a NR system. FIG. 1 is merely for convenience of explanation and does not limit the scope of the disclosure.

In Table 4, in case of μ = 2, i.e., as an example in which a subcarrier spacing (SCS) is 60 kHz, one subframe (or frame) may include four slots with reference to Table 3, and one subframe = {1, 2, 4} slots shown in FIG. 1, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

The physical resources that may be considered in the NR system are described in detail below.

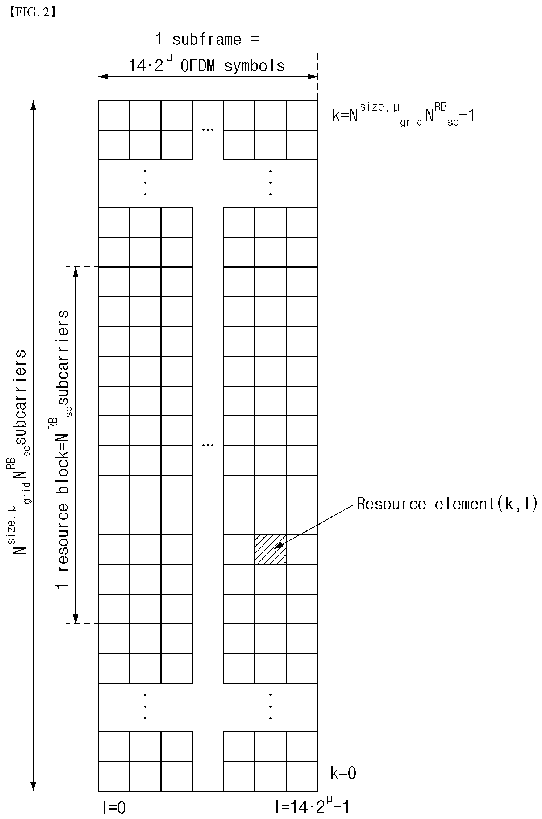

FIG. 2 illustrates an example of a resource grid supported in NR.

Referring to FIG. 2, for each subcarrier spacing configuration and carrier, a resource grid of $N^{\text{size},\mu}_{\text{grid}}$*$N^{\text{RB}}_{\text{sc}}$ subcarriers and 14·2$^{\mu}$ OFDM symbols is defined, where $N^{\text{size},\mu}_{\text{grid}}$ is indicated by RRC signaling from the BS. $N^{\text{size},\mu}_{\text{grid}}$ may change between uplink and downlink as well as the subcarrier spacing configuration μ.

Each element of the resource grid for the numerology μ and the antenna port p is called a resource element and is uniquely identified by an index pair $(k,\bar{l})$, , where $k = 0,..., N_{\text{RB}}^{\mu} N_{\text{sc}}^{\text{RB}} - 1$ is an index on a frequency domain, and $\bar{l} = 0,..., 2^{\mu} N_{\text{symb}}^{(\mu)} - 1$ refers to a location of a symbol in a subframe. The index pair $(k,l)$ is used to refer to a resource element in a slot, where $l = 0,...,N_{\text{symb}}^{\mu} - 1$.

The resource element $(k, \bar{l})$ for the numerology $\mu$ and the antenna port p corresponds to a complex value $a_{k,\bar{l}}^{(p,\mu)}$. When there is no risk for confusion or when a specific antenna port or numerology is not specified, the indices p and $\mu$ may be dropped, and as a result, the complex value may be $a_{k,\bar{l}}^{(p)}$ or $a_{k,\bar{l}}$. Further, a physical resource block is defined as $N_{\text{sc}}^{\text{RB}} = 12$ consecutive subcarriers in the frequency domain.

Considering that the UE may not be able to support a wide bandwidth to be supported in the NR system at one time, the UE may be configured to operate in a part of a frequency bandwidth of a cell (hereinafter, referred to as a bandwidth part (BWP)).

Resource blocks of the NR system include physical resource blocks defined in the bandwidth part and common resource blocks that are numbered upward from 0 in a frequency domain for the subcarrier spacing configuration $\mu$.

Point A serves as a common reference point of a resource block grid and may be obtained as follows.

- offsetToPointA for a PCell downlink represents a frequency offset between point A and the lowest subcarrier of the lowest resource block that overlaps with the SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents the frequency-location of point A expressed as in absolute radio-frequency channel number (ARFCN);

The common resource blocks are numbered from 0 and upwards in the frequency domain for subcarrier spacing configuration $\mu$.

The center of subcarrier 0 of common resource block 0 for the subcarrier spacing configuration $\mu$ coincides with "point A". A common resource block number $n_{\text{CRB}}^{\mu}$ in the frequency domain and resource elements (k, l) for the subcarrier spacing configuration $\mu$ may be given by the following Equation 1.

【Equation 1】

$$n_{\text{CRB}}^{\mu} = \left\lfloor \frac{k}{N_{\text{sc}}^{\text{RB}}} \right\rfloor$$

Here, $k$ may be defined relative to point A so that $k = 0$ corresponds to a subcarrier centered around point A. Physical resource blocks are defined within a bandwidth part (BWP) and are numbered from 0 to $N_{\text{BWP},i}^{\text{size}} - 1$, where $i$ is a number of the BWP. A relation between the physical resource block $n_{\text{PRB}}$ in BWP $i$ and the common resource block $n_{\text{CRB}}$ may be given by the following Equation 2.

【Equation 2】

$$n_{\text{CRB}} = n_{\text{PRB}} + N_{\text{BWP},i}^{\text{start}}$$

Here, $N_{\text{BWP},i}^{\text{start}}$ may be the common resource block where the BWP starts relative to the common resource block 0.

## Bandwidth Part (BWP)

In the NR system, up to 400 MHz can be supported per one carrier. If a UE operating in such a wideband carrier is always operated with a radio frequency (RF) module for all carriers turned on, battery consumption by the UE may increase. Alternatively, considering several use cases (e.g., eMBB, URLLC, mMTC, V2X, etc.) that are operated in one wideband carrier, different numerologies (e.g., subcarrier spacing) may be supported for each frequency band in the corresponding carrier. Alternatively, a capability for a maximum bandwidth may be different for each UE. Considering this, a base station (BS) may indicate the UE to operate only in a partial bandwidths rather than the entire bandwidth of a wideband carrier, and the partial bandwidth is defined as a bandwidth part (BWP). The BWP in the frequency doamin is a subset of continuous common resource blocks defined for numerology μi within a bandwidth part i on the carrier, and one numerology (e.g., subcarrier spacing, CP length, slot/mini-slot duration) may be configured.

The BS may configure one or more BWPs within one carrier configured for the UE. Alternatively, if UEs are concentrated on a specific BWP, some UEs may be shifted to different BWPs for load balancing. Alternatively, both BWPs may be configured in the same slot excluding some center spectrums of the entire bandwidth considering frequency domain inter-cell interference cancellation between contiguous cells, etc. That is, the BS can configure at least one DL/UL BWP to a UE associated with the wideband carrier, can activate at least one DL/UL BWP of configured DL/UL BWP(s) at a specific time (by L1 signaling which is the physical layer control signal, MAC control element (CE) which is the MAC layer control signal, or RRC signaling, etc.) and indicate to switch to other configured DL/UL BWP (by L1 signaling, MAC CE, or RRC signaling, etc.), or can the UE to switch to a given DL/UL BWP if a timer value is set and a timer is expired. The activated DL/UL BWP is defined as an active DL/UL BWP. The UE may not receive configuration for the DL/UL BWP when the UE is in an initial access procedure or RRC connection of the UE is not set up yet. In this situation, a DL/UL BWP assumed by the UE is defined as an initial active DL/UL BWP.

Physical Channel and General Signal Transmission

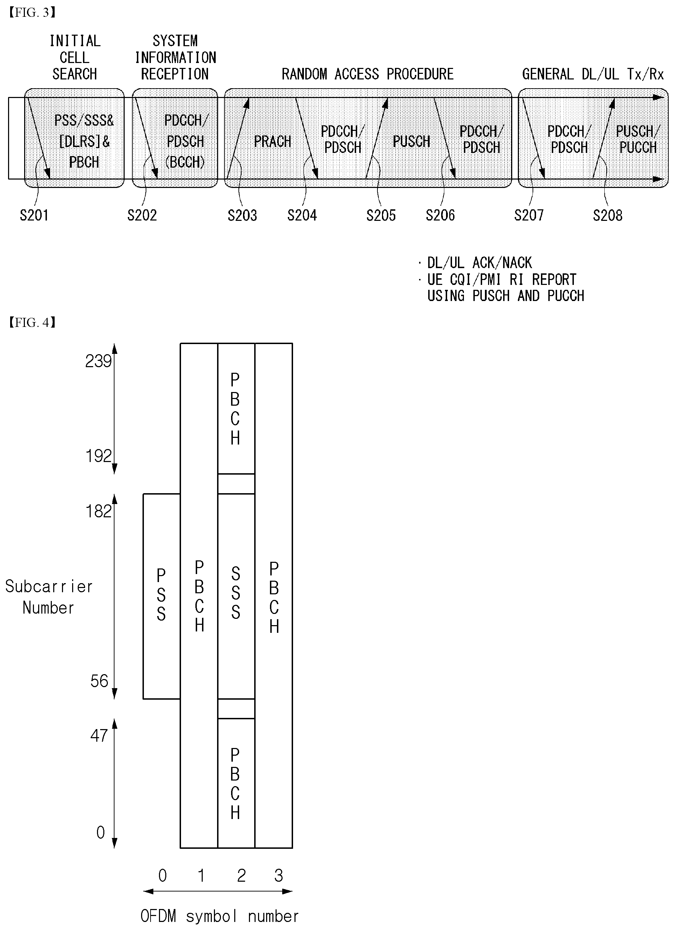

FIG. 3 illustrates physical channels and general signal transmission used in 3GPP systems. In a wireless communication system, the UE receives information from the eNB through downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S301). To this end, the UE may receive a primary synchronization signal (PSS) and a (secondary synchronization signal (SSS) from the eNB and synchronize with the eNB and acquire information such as a cell ID or the like. Thereafter, the UE may receive a physical broadcast channel (PBCH) from the eNB and acquire in-cell broadcast information. The UE receives a downlink reference signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S302).

When there is no radio resource first accessing the eNB or for signal transmission, the UE may perform a Random Access Procedure (RACH) to the eNB (S303 to S306). To this end, the UE may transmit a specific sequence to a preamble through a Physical Random Access Channel (PRACH) (S303 and S305) and receive a response message (Random Access Response (RAR) message) for the preamble through the PDCCH and a corresponding PDSCH. In the case of a contention based RACH, a Contention Resolution Procedure may be additionally performed (S306).

The UE that performs the above procedure may then perform PDCCH/PDSCH reception (S307) and Physical Uplink Shared Channel (PUSCH)/Physical Uplink Control Channel (PUCCH) transmission (S308) as a general uplink/-downlink signal transmission procedure. In particular, the UE may receive Downlink Control Information (DCI) through the PDCCH.

The UE monitors a set of PDCCH candidates in monitoring occasions configured to one or more control element sets (CORESETs) on a serving cell based on corresponding search space configurations. The set of PDCCH candidates to be monitored by the UE is defined in terms of search space sets, and the search space set may be a common search space set or a UE-specific search space set. The CORESET consists of a set of (physical) resource blocks with a duration of one to three OFDM symbols. A network may configure the UE to have a plurality of CORESETs. The UE monitors PDCCH candidates in one or more search space sets. Here, the monitoring means attempting to decode PDCCH candidate(s) in a search space. If the UE succeeds in decoding one of the PDCCH candidates in a search space, the UE determines that a PDCCH has been detected from the PDCCH candidates and performs PDSCH reception or PUSCH transmission based on DCI within the detected PDCCH.

The PDCCH may be used to schedule DL transmissions on PDSCH and UL transmissions on PUSCH. The DCI on the PDCCH includes downlink assignment (i.e., DL grant) related to a downlink shared channel and including at least a modulation and coding format and resource allocation information, or an uplink grant (UL grant) related to an uplink shared channel and including a modulation and coding format and resource allocation information. The DCI has different formats depending on its purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Initial Access (IA) and Random Access (RA) procedure**

**Synchronization Signal Block (SSB) Transmission and Related Operation**

FIG. 4 is a diagram illustrating an SSB structure to which a method proposed in the present disclosure is applicable. The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 4, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers.

Polar coding and quadrature phase shift keying (QPSK) are applied to the PBCH. The PBCH consists of data REs and demodulation reference signal (DMRS) REs every OFDM symbol. Three DMRS REs are present per RB, and three data REs are present between the DMRS REs.

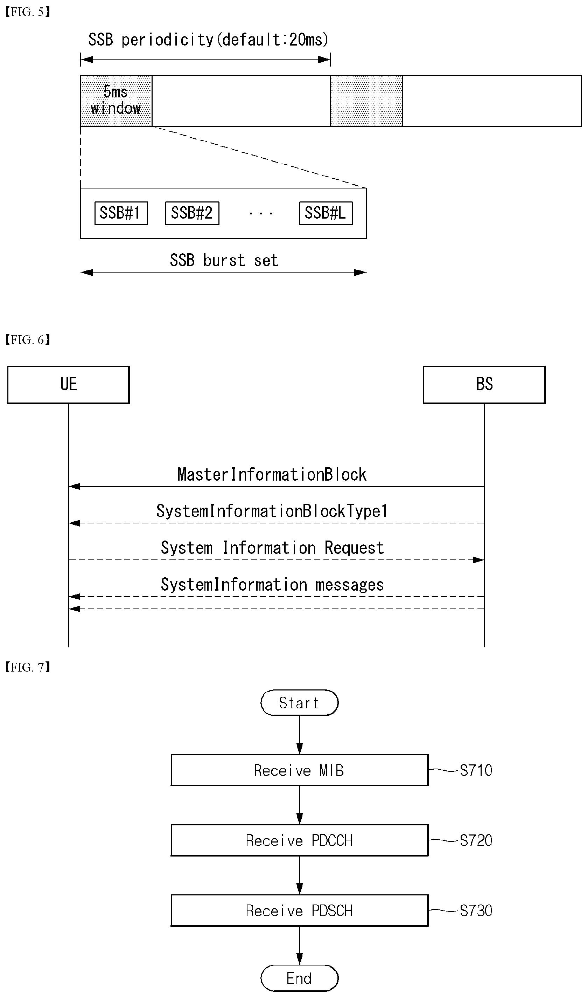

FIG. 5 illustrates SSB transmission to which a method proposed in the present disclosure is applicable.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SSB burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time location of SSB candidates within the SSB burst set may be defined depending on SCS as follows. The time location of the SSB candidates is indexed (SSB index) from 0 to L-1 based on time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

**System Information Acquisition**

FIG. 6 illustrates a system information (SI) acquisition process.

The UE may acquire AS-/NAS-information through an SI acquisition process. The SI acquisition process may be applied to UEs which are in an RRC_IDLE state, an RRC_INACTIVE state, an RRC _CONNECTED state.

System information (SI) is divided into a master information block (MIB) and a plurality of system information blocks (SIB). The SI other than the MIB may be referred to as remaining minimum system information (RMSI). The following may be referred to for details.

- The MIB includes information/parameters for monitoring PDCCH scheduling PDSCH carrying system information block1 (SIB1) and is transmitted by a BS via PBCH of SSB. For example, a UE may check whether a control resource set (CORESET) for a Type0-PDCCH common search space exists based on the MIB. The Type0-PDCCH common search space is a kind of PDCCH search space and is used to transmit a PDCCH for scheduling an SI message. If there is a Type0-PDCCH common search space, the UE may determine, based on information (e.g., pdcch-ConfigSIB1)) within the MIB, (i) a plurality of contiguous resource blocks and one or more consecutive symbols constituting the CORESET, and (ii) a PDCCH occasion (e.g., time domain location for PDCCH reception). If there is no Type0-PDCCH common search space, pdcch-ConfigSIB1 provides information for a frequency location where SSB/SIB1 exists and a frequency range where the SSB/SIB1 does not exist.

- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB1 may include information which the UE requires to perform an SI request. The SIB1 is transmitted via the PDSCH, the PDCCH for scheduling the SIB1 is transmitted through the Type0-PDCCH common search space, and the SIB1 is transmitted via the PDSCH indicated by the PDCCH.

- The SIBx is included in the SI message and is transmitted via the PDSCH. Each SI message is sent within a time window (i.e., SI-window) which periodically occurs.

The contents described above can be combined and applied to methods described below in the present disclosure, or can be supplemented to clarify technical features of the methods described in the present disclosure. Methods described below are merely distinguished for convenience of explanation. Thus, it is obvious that partial configuration of any method can be substituted or combined with partial configuration of another method.

**Technical terms used in the present disclosure**

UE: User Equipment
SSB: Synchronization Signal Block
MIB: Master Information Block
RMSI: Remaining Minimum System Information
FR1: Frequency domain with frequency range of 1.6 GHz or less (e.g., 450 MHz to 6,000 MHz)
FR2: Millimeter wave (mmWave) domain with frequency range of 2.24 GHz or higher (e.g., 24,250 MHz to 52,600 MHz)
BW: Bandwidth
BWP: Bandwidth Part
RNTI: Radio Network Temporary Identifier
CRC: Cyclic Redundancy Check
SIB: System Information Block
SIB1: SIB1 for NR devices = RMSI (Remaining Minimum System Information). It broadcasts information, etc. necessary for cell access of an NR UE.
CORESET (COntrol REsource SET): Time/frequency resource in which an NR UE tries candidate PDCCH decoding
CORESET#0: CORESET for Type0-PDCCH CSS set for NR devices (configured in MIB)
Type0-PDCCH CSS set: a search space set in which an NR UE monitors a set of PDCCH candidates for a DCI format with CRC scrambled by a SI-RNTI
MO: PDCCH Monitoring Occasion for Type0-PDCCH CSS set
SIB1-R: (additional) SIB1 for reduced capability NR devices. It may be limited when it is generated with a separate TB from SIB1 and is transmitted on a separate PDSCH.
CORESET#0-R: CORESET#0 for reduced capability NR devices
Type0-PDCCH-R CSS set: a search space set in which a redcap UE monitors a set of PDCCH candidates for a DCI format with CRC scrambled by a SI-RNTI
MO-R: PDCCH Monitoring Occasion for Type0-PDCCH CSS set
Cell defining SSB (CD-SSB): SSB including RMSI scheduling information among NR SSBs
Non-cell defining SSB (non-CD-SSB): SSB that has been deployed on NR sync raster, but does not include RMSI scheduling information of a corresponding cell for measurement. But, the SSB may include information informing a location of cell defining SSB.
SCS: subcarrier spacing
SI-RNTI: System Information Radio-Network Temporary Identifier
Camp on: "Camp on" is the UE state in which the UE stays on a cell and is ready to initiate a potential dedicated service or to receive an ongoing broadcast service.
TB: Transport Block
RSA (Redcap standalone): Cell supporting only redcap device or service
SIB1(-R)-PDSCH: PDSCH transmitting SIB1(-R)
SIB1(-R)-DCI: DCI scheduling SIB1(-R)-PDSCH. DCI format 1_0 with CRC scrambled by SI-RNTI.
SIB1(-R)-PDCCH: PDCCH transmitting SIB1(-R)-DCI
FDRA: Frequency Domain Resource Allocation

TDRA: Time Domain Resource Allocation

RA: Random Access

MSGA: preamble and payload transmissions of the random access procedure for 2-step RA type.

MSGB: response to MSGA in the 2-step random access procedure. MSGB may consist of response(s) for contention resolution, fallback indication(s), and backoff indication.

RO-N: RACH Occasion (RO) for normal UE 4-step RACH and 2-step RACH (if configured)

RO-N1, RO-N2: If separate RO is configured for normal UE 2-step RACH, it is divided into RO-N1 (4-step) and RO-N2 (2-step).

RO-R: RACH Occasion (RO) separately configured from RO-N for redcap UE 4-step RACH and 2-step RACH(if configured)

RO-R1, RO-R2: If separate RO is configured for redcap UE 2-step RACH, it is divided into RO-R1 (4-step) and RO-R2 (2-step).

PG-R: MsgA-Preambles Group for redcap UEs

RAR: Random Access Response

RAR window: the time window to monitor RA response(s)

FH: Frequency Hopping

iBWP: initial BWP

iBWP-DL(-UL): initial DL(UL) BWP

iBWP-DL(-UL)-R: (separate) initial DL(UL) BWP for RedCap

CS: Cyclic shift

NB: Narrowband

TO: Traffic Offloading

mMTC; massive Machine Type Communications

eMBB: enhanced Mobile Broadband Communication

URLLC: Ultra-Reliable and Low Latency Communication

RedCap: Reduced Capability

eRedCap: enhanced RedCap

FDD: Frequency Division Duplex

HD-FDD: Half-Duplex-FDD

DRX: Discontinuous Reception

RRC: Radio Resource Control

RRM: Radio Resource Management

IWSN: Industrial Wireless Sensor Network

LPWA: Low Power Wide Area

RB: Resource Block

CCE: Control Channel Element

AL: Aggregation Level

PRG: Physical Resource-block Group

DFT-s-OFDM: DFT-spread OFDM

PBCH: Physical Broadcast Channel

A-PBCH: Additional PBCH

BD: blind detection

EPRE: Energy Per RE

SNR: Signal-to-Noise Ratio

TDM: Time Division Multiplexing

DMRS: DeModulation Reference Signal

TDD: Time Division Duplex

SS: Synchronization Signal

RS: Reference Signal

SIB1-eR: dedicated SIB1 for eRedCap devices. Dedicated SIB1 for eRedCap devices may be generated and transmitted in the same TB as in a separate TB from SIB1 for a non-eRedCapUE, and if generated in the separate TB, the dedicated SIB1 for eRedCap devices may be transmitted to a separate PDSCH.

RF: Radio Frequency

BB: BaseBand

OSI: Other System Information

In the present disclosure, '()' may be interpreted as both excluding the contents in () and including the contents in parentheses.

**EP 4 598 137 A1**

In the present disclosure, '/' may mean that all of the contents distinguished by / are included (and) or only some of the distinguished contents are included (or).

In recent years, in addition to main 5G use cases (mMTC, eMBB, and URLLC), an importance/interest in the use case areas spanning mMTC and eMBB, or mMTC and URLLC, is increasing. In order to support these use cases, including connected industries, smart cities, and wearables, more efficiently in terms of UE cost/complexity, power consumption, etc., in the wireless communication system, a new type of UE that is distinct from the conventional NR UE has been introduced. The new type of UE will be referred to as Reduced Capability NR UE/terminal, or simply referred to as RedCap UE/terminal or RedCap, and to distinguish them from the conventional NR UE, the conventional NR UE will be referred to as non-RedCap UE/terminal, non-RedCap, or general/conventional NR UE/terminal.

The RedCap UE is less expensive and has lower power consumption than the non-RedCap UE, and may have all or some of the features in detail based on Table 5 below.

[Table 5]

[RedCap UE features]
● Complexity reduction features
■ Reduced maximum UE Bandwidth
■ Reduced number of UE RX/TX branches/antennas
■ Half-Duplex-FDD
■ Relaxed UE processing time
■ Relaxed UE processing capability
● Power saving
■ Extended DRX for RRC Inactive and/or Idle
■ RRM relaxation for stationary devices

The target use cases of the Redcap UE with the features may be based on Table 6 below.

[Table 6]

[Redcap use cases]
● Connected industries
■ Sensors and actuators are connected to 5G networks and core
■ Include massive **IWSN (Industrial Wireless Sensor Network)** use cases and requirements
■ Not only URLLC services with very high requirements, but also relatively low-end services with the requirement of small device form factors with a battery life of several years
■ Requirements for these services are higher than LPWA (Low Power Wide Area, i.e. LTE-M/NB-IOT) but lower than URLCC and eMBB
■ Devices in such environment include e.g. pressure sensors, humidity sensors, thermometers, motion sensors, accelerometers, actuators, etc.
● Smart city
■ The smart city vertical covers data collection and processing to more efficiently monitor and control city resources, and to provide services to city residents
■ Especially, the deployment of **surveillance cameras** is an essential part of the smart city but also of factories and industries
● Wearables
■ Wearables use case includes **smart watches,** rings, eHealth related devices, and medical monitoring devices etc.
■ One characteristic for the use case is that the device is small in size

The RedCap UE may operate based on Table 7 below.

[Table 7]

A UE with reduced capabilities (RedCap UE) supports all Layer-1 UE features that are mandatory without capability signalling, unless stated otherwise.
17.1 RedCap UE procedures

Procedures for a RedCap UE are same as described for a UE in all other clauses of this document unless stated otherwise. In this clause, the term 'UE' refers to a RedCap UE.

A UE expects the initial DL BWP and the active DL BWP after the UE (re)establishes dedicated RRC connection to be smaller than or equal to the maximum DL bandwidth that the UE supports. A UE can be provided a DL BWP by *initialDownlinkBWP-RedCap* in *DownlinkConfigCommonSIB,* and an UL BWP by *initialUplinkBWP-RedCap* in *UplinkConfigCommonSIB.* If *initialUplinkBWP* in *UplinkConfigCommonSIB* indicates an UL BWP that is larger than a maximum UL BWP that a UE supports, the UE expects to be provided an UL BWP by *initialUplinkBWP-RedCap* in *UplinkConfigCommonSIB* that is smaller than or equal to the maximum UL bandwidth that the UE supports.

For unpaired spectrum operation, a RedCap UE does not expect to receive a configuration where the center frequency for an initial DL BWP in which the UE is configured to monitor Type1-PDCCH CSS set is different than the center frequency for an initial UL BWP in which the RedCap UE may transmit Msg1/Msg3 or MsgA.

A UE can be provided by *BWP-DownlinkDedicated* a DL BWP, other than the initial DL BWP. A UE can be provided by *BWP-UplinkDedicated* an UL BWP, other than the initial UL BWP, that is smaller than or equal to the maximum UL bandwidth that the UE supports.

If a UE is provided an UL BWP by *initialUplinkBWP-RedCap* in *UplinkConfigCommonSIB* and is provided *rach-ConfigCommon* or *msgA-ConfigCommon* in *BWP-UplinkCommon* for the UL BWP, the UE uses corresponding parameters to perform the procedures in clauses 8.1, 8.1A, and 8.3; otherwise, the UE uses corresponding parameters from *rach-ConfigCommon* or *msgA-ConfigCommon* in *BWP-UplinkCommon* for the UL BWP provided by *initialUplinkBWP.*

If a UE is provided *initialUplinkBWP-RedCap* in *UplinkConfigCommonSIB* and does not have dedicated PUCCH resource configuration, the UE transmits PUCCH with HARQ-ACK information as described in clause 9.2.1 using a PUCCH resource set provided by *pucch-ResourceCommonRedCap,* except that frequency hopping for the PUCCH transmission is disabled if *intra-SlotFH* is present in *PUCCH-ConfigCommon.* If frequency hopping of the PUCCH transmission is disabled then, for the PUCCH transmission, the UE determines the initial cyclic shift index in the set of initial cyclic shift indexes as $r_{\mathrm{PUCCH}}\mathrm{mod}N_{\mathrm{CS}}$ and determines the PRB index as

$$RB_{\mathrm{BWP}}^{\mathrm{offset}} + RB_{\mathrm{BWP}}^{\mathrm{offset\text{-}add}} + \lfloor r_{\mathrm{PUCCH}}/N_{\mathrm{CS}}\rfloor, \text{ if } \textit{intra-SlotFH} = \textit{'fromLowerEdge'}$$

$$N_{\mathrm{BWP}}^{\mathrm{size}} - RB_{\mathrm{BWP}}^{\mathrm{offset}} - RB_{\mathrm{BWP}}^{\mathrm{offset\text{-}add}} - 1 - \lfloor r_{\mathrm{PUCCH}}/N_{\mathrm{CS}}\rfloor,$$

- otherwise where $RB_{\mathrm{BWP}}^{\mathrm{offset\text{-}add}}$ is provided by *additionalPRBOffset,* if provided; otherwise, $RB_{\mathrm{BWP}}^{\mathrm{offset\text{-}add}} = 0$.

If a UE is not provided *initialUplinkBWP-RedCap* in *UplinkConfigCommonSIB* and does not have dedicated PUCCH resource configuration, the UE transmits PUCCH with HARQ-ACK information

as described in clause 9.2.1 using a PUCCH resource set provided by *pucch-ResourceCommonRedCap* if *pucch-ResourceCommonRedCap* is present or by *pucch-ResourceCommon* if *pucch-ResourceCommonRedCap* is absent. For an initial DL BWP provided by *initialDownlinkBWP-RedCap* in *DownlinkConfigCommonSIB,* if a UE in RRC_IDLE state or in RRC_INACTIVE state monitors PDCCH according to Type1-PDCCH CSS set and does not monitor PDCCH according to Type2-PDCCH CSS set, the UE does not expect the initial DL BWP to include SS/PBCH blocks and the CORESET with index 0.

For an active DL BWP not provided by *BWP-DownlinkDedicated,* if a UE does not indicate a capability to operate in the active DL BWP without receiving an SS/PBCH block, the UE in RRC_CONNECTED state assumes that the active DL BWP includes the SS/PBCH blocks that the UE used to obtain SIB1 and, for SS/PBCH block and CORESET multiplexing pattern 1, the CORESET with index 0.

For an active DL BWP provided by *BWP-DownlinkDedicated,* unless a UE indicates a capability to operate in the active DL BWP without receiving an SS/PBCH block, the UE in RRC_CONNECTED state assumes that the active DL BWP includes the SS/PBCH blocks that the UE used to obtain SIB1 or the SS/PBCH blocks provided by *NonCellDefiningSSB.* If the active DL BWP includes the SS/PBCH blocks that the UE used to obtain SIB1, for SS/PBCH block and CORESET

multiplexing pattern 1, the UE expects the active DL BWP to include the CORESET with index 0. If the active DL BWP includes the SS/PBCH blocks provided by *NonCellDefiningSSB,* these SS/PBCH blocks and the SS/PBCH blocks that the UE used to obtain SIB1 have the same QCL properties, if they have the same index.

(continued)

> For a RedCap UE indicated presence of SS/PBCH blocks within an active DL BWP by *NonCellDefiningSSB,* collision handling between downlink receptions or uplink transmissions and the SS/PBCH blocks are same as described for a UE indicated presence of SS/PBCH blocks by *ssb-PositionsInBurst* in SIB1 or in *ServingCellConfig-Common* described in all other clauses, unless otherwise stated.
> For monitoring of a PDCCH candidate by a UE configured with *NonCellDefiningSSB,* if the UE
> - does not monitor PDCCH candidates in a Type0-PDCCH CSS set, and
> - at least one RE for a PDCCH candidate overlaps with at least one RE of a candidate SS/PBCH block corresponding to a SS/PBCH block index provided by *NonCellDefiningSSB,*
> the UE is not required to monitor the PDCCH candidate.

Operations based on the embodiments of the present disclosure described below may be applied in combination with the definitions/configurations/operations of Table 7. For example, a DL-related operation based on the embodiment of the present disclosure described below may be based on the DL-related operation defined in Table 7.

Hereinafter, a background of introduction of an eRedCap UE type for further UE complexity reduction will be specifically described. As mentioned above, a method for maximally reducing a UE reception bandwidth may be considered in order to reduce the complexity/power consumption of the RedCap UE. However, if the UE reception bandwidth is reduced to a specific value or more, common channel reception such as SIB1, OSI, Msg2 (RAR), Msg4, etc., may become impossible, which may have a negative impact on an existing network configuration or coexistence with the non-RedCap UE. Considering such a disadvantage, schemes based on [1] and [2] below are being considered.

> [1] Bandwidths supported by the UE are separated for data transmission and reception. Specifically, PDSCH/PUSCH (transmit/receive) bandwidth of the UE and UE bandwidth for transmitting/receiving control channels or other signals are separated.
> [2] Only the PDSCH/PUSCH bandwidths are reduced.

At this time, the PDSCH includes a PDSCH for broadcast and a PDSCH for unicast.

By such a method, a UE (type) in which UE complexity/power consumption is reduced additionally compared to the RedCap UE will be referred to as enhanced RedCap, and abbreviated as eRedCap UE/terminal or simply referred to as eRedCap. Conversely, a non-eRedCap UE (including RedCap UE and non-RedCap UE) is referred to as non-eRedCap UE/terminal or simply referred to as non-eRedCap.

The present disclosure proposes a method for transmitting system information, in particular, SIB1 for the eRedCap UE, more specifically, a UE in which only a UE PDSCH/PUSCH bandwidth is reduced, and a base station/UE operation for supporting the SIB1 transmitting method.

The SIB1 PDSCH and the SIB1 PDCCH refer to a PDSCH that transmits SIB1 information itself and a control channel that transmits scheduling information of the SIB1 PDSCH, respectively.

In the present disclosure, the frequency band may include the meaning of a location/size of the frequency band.

In the present disclosure, post-FFT RE buffering refers to an operation of storing RE units for post-processing operations such as channel estimation/compensation, LDCP decoding, etc., at an FFT output terminal of the receiving unit during the process of receiving an OFDM signal by an NR UE. Reducing the buffer size required for the above post-FFT RE buffering operation is effective in reducing UE complexity/cost.

The methods proposed by the present disclosure are mainly described with respect to base station/UE operations when transmitting the SIB1 PDSCH, but are not limited to SIB1 PDSCH transmission, and may be equally applied even when transmitting system information (e.g., OSI), Msg2 (RAR), Msg4, paging, etc., other than the SIB1 with a common/broadcast PDSCH.

[Method #1]

The base station may arbitrarily determine a location and a bandwidth of a transmission frequency band of the SIB1 PDSCH within a range that satisfies some or all of the following conditions (Condition #1 and Condition #2). The base station may transmit DCI including the determined information related to the transmission frequency band of the SIB PDSCH to the UE. The DCI may be a DCI for scheduling the SIB1 PDSCH. As an example, the base station may transmit SIB1 PDSCH scheduling information including the determined frequency band information for transmission of the SIB1 PDSCH through the DCI (hereinafter referred to as SIB1 DCI).

- Condition #1: The transmission frequency bandwidth of the SIB1 PDSCH is smaller than or equal to the PDSCH/PUSCH bandwidth of the eRedCap UE.

- Condition #2: The transmission frequency band of the SIB1 PDSCH is included within the CORESET#0 band.

The conditions described above are examples. That is, the embodiment may be applied even in cases where conditions other than the above-described conditions are applied separately or together to determine the transmission frequency band of the SIB1 PDSCH.

The eRedCap UE may receive the SIB1 DCI in the same scheme as the non-eRedCap UE. Specifically, based on the existing method defined for the non-eRedCap UE (e.g., see Tables 8 to 10 below), the eRedCap UE acquires CORESET#0 and Type0-PDCCH CSS set information from the MIB and receives the SIB1 DCI based on the acquired information (e.g., pdcch-ConfigSIB1, see Tables 8 and 9). Existing operations related to reception of the SIB1 DCI may be based on Table 8 below.

[Table 8]

| **13 UE procedure for monitoring Type0-PDCCH CSS sets** |
| --- |
| If during cell search a UE determines from *MIB* that a CORESET for Type0-PDCCH CSS set is present, as described in clause 4.1, the UE determines a number of consecutive resource blocks and a number of consecutive symbols for the CORESET of the Type0-PDCCH CSS set from *controlResourceSetZero* in *pdech-ConfigSIB1,* as described in Tables 13-1 through 13-10, for operation without shared spectrum channel access in FR1 and FR2-1, or as described in Tables 13-1A and 13-4A for operation with shared spectrum channel access in FR1, or as described in Table 13-10A for FR2-2, and determines PDCCH monitoring occasions from *searchSpaceZero* in *pdech-ConfigSIB1,* included in *MIB*, as described in Tables 13-11 through 13-15A. $SFN_c$ and $n_c$ are the SFN and slot index within a frame of the CORESET based on SCS of the CORESET and $SFN_{SSB,i}$ $n_{SSB,i}$ are the SFN and slot index based on SCS of the CORESET, respectively, where the SS/PBCH block with index *i* overlaps in time with system frame $SFN_{SSB,i}$ and slot $n_{SSB,i}$. The symbols of the CORESET associated with *pdcch-ConfigSIB1* in *MIB* or with *searchSpaceSIB1* in *PDCCH-ConfigCommon* have normal cyclic prefix. |
| For operation with shared spectrum channel access in FR2-2 and for operation without shared spectrum channel access, a UE assumes that the offset in Tables 13-1 through 13-10A is defined with respect to the SCS of the CORESET for Type0-PDCCH CSS set from the smallest RB index of the CORESET for Type0-PDCCH CSS set to the smallest RB index of the common RB overlapping with the first RB of the corresponding SS/PBCH block. The SCS of the CORESET for Type0-PDCCH CSS set is provided by *subCarrierSpacingCommon* for FR1 and FR2-1 and same as the SCS of the corresponding SS/PBCH block for FR2-2. In Tables 13-7, 13-8, and 13-10, $k_{SSB}$ is defined in [4, TS 38.211]. |
| For operation with shared spectrum channel access in FR1, a UE determines an offset from a smallest RB index of the CORESET for Type0-PDCCH CSS set to a smallest RB index of the common RB overlapping with a first RB of the corresponding SS/PBCH block |
| - according to the offset in Table 13-1A or Table 13-4A, if the frequency position of the SS/PBCH block corresponds to the GSCN of a synchronization raster entry as defined in [8-1, TS 38.101-1], and |
| - according to a sum of a first offset and a second offset if the frequency position of the SS/PBCH block is provided by *ssbFrequency* in a measurement configuration associated with a reporting configuration providing *reportCGI* and does not correspond to the GSCN of a synchronization raster entry as defined in [8-1, TS 38.101-1], where |
| - the first offset is provided in Table 13-1A or Table 13-4A, and |
| - the second offset is determined as the offset from a smallest RB index of the common RB overlapping with the first RB of the SS/PBCH block indicated in the measurement configuration to a smallest RB index of the common RB overlapping with the first RB of a SS/PBCH block hypothetically located at the GSCN of a synchronization |

| raster entry, where the single synchronization raster entry is located in the same channel as the SS/PBCH block used for the shared spectrum channel access procedure, as described in [15, TS 37.213] |
| --- |
| where the offsets are defined with respect to the SCS of the CORESET for Type0-PDCCH CSS set that is same as the SCS of the corresponding SS/PBCH block. |

(continued)

For operation without shared spectrum channel access and for the SS/PBCH block and CORESET multiplexing pattern 1, a UE monitors PDCCH in the Type0-PDCCH CSS set over two slots. For SS/PBCH block with index $i$, the UE determines an index of slot $n_0$ as $n_0 = (O \cdot 2^\mu + \lfloor i \cdot M \rfloor) \bmod N_{\text{slot}}^{\text{frame},\mu}$ that is in a frame with system frame number (SFN) SFN$_C$ satisfying SFN$_c$ mod 2 = 0 if $\left\lfloor (O \cdot 2^\mu + \lfloor i \cdot M \rfloor)/N_{\text{slot}}^{\text{frame},\mu} \right\rfloor \bmod 2 = 0$, or in a frame with SFN satisfying SFN$_c$ mod 2 = 1 if $\left\lfloor (O \cdot 2^\mu + \lfloor i \cdot M \rfloor)/N_{\text{slot}}^{\text{frame},\mu} \right\rfloor \bmod 2 = 1$ where $\mu \in$ {0,1,2,3,5,6} based on the SCS for PDCCH receptions in the CORESET [4, TS 38.211].

- For $\mu \in$ {0,1,2,3} and for a SS/PBCH block index $i$, the two slots including the associated Type0-PDCCH monitoring occasions are slots $n_0$ and $n_0$ + 1. $M$, $O$, and the index of the first symbol of the CORESET in slots $n_0$ and $n_0$ + 1 are provided by Table 13-11 and Table 13-12.

- For $\mu$ = 5 and for a SS/PBCH block index $i$, the two slots including the associated Type0-PDCCH monitoring occasions are slots $n_0$ and $n_0$ + 4. $M$, $O$, and the index of the first symbol of the CORESET in slots $n_0$ and $n_0$ + 4 are provided by Table 13-12A, where $X$ = 1.25.

- For $\mu$ = 6 and for a SS/PBCH block index $i$, the two slots including the associated Type0-PDCCH monitoring occasions are slots $n_0$ and $n_0$ +8. $M$, $O$, and the index of the first symbol of the CORESET in slots $n_0$ and $n_0$ + 8 are provided by Table 13-12A, where $X$ = 0,625.

For operation with shared spectrum channel access and for the SS/PBCH block and CORESET multiplexing pattern 1, a UE monitors PDCCH in the Type0-PDCCH CSS set over slots that include Type0-PDCCH monitoring occasions associated with SS/PBCH blocks that are quasi co-located with the SS/PBCH block that provides a CORESET for Type0-PDCCH CSS set with respect to average gain, quasi co-location 'typeA' and 'typeD' properties, when applicable [6, TS 38.214]. For a candidate SS/PBCH block index $\bar{i}$, where $0 \leq \bar{i} \leq \bar{L}_{max}$ - 1, two slots include the associated Type0-PDCCH monitoring occasions. The UE determines an index of slot $n_0$ as

$$n_0 = (O \cdot 2^\mu + \lfloor \bar{i} \cdot M \rfloor) \bmod N_{\text{slot}}^{\text{frame},\mu}$$ that is in a frame with system frame number (SFN) SFN$_c$ satisfying SFN$_c$ $mod$ 2 = 0 if $\left\lfloor (O \cdot 2^\mu + \lfloor \bar{i} \cdot M \rfloor)/N_{\text{slot}}^{\text{frame},\mu} \right\rfloor mod\ 2 = 0$, or in a frame with SFN satisfying SFN$_C$ $mod$ 2 = 1 if $\left\lfloor (O \cdot 2^\mu + \lfloor \bar{i} \cdot M \rfloor)/N_{\text{slot}}^{\text{frame},\mu} \right\rfloor mod\ 2 = 1$ where $\mu \in$ {0,1,3,5,6} based on the SCS for PDCCH receptions in the CORESET [4, TS 38.211].

- For $\mu \in$ {0, 1} and for a candidate SS/PBCH block index $\bar{i}$, the two slots including the associated Type0-PDCCH monitoring occasions are slots $n_0$ and $n_0$ + 1. $M$, $O$, and the index of the first symbol of the CORESET in slots $n_0$ and $n_0$ + 1 are provided

by Table 13-11. The UE does not expect to be configured with $M$ = 1/2, or with $M$ = 2, when $N_{SSB}^{QCL} = 1$.

- For $\mu$ = 3 and for a candidate SS/PBCH block index $\bar{i}$, the two slots including the associated Type0-PDCCH monitoring occasions are slots $n_0$ and $n_0$ + 1. $M$, $O$, and the index of the first symbol of the CORESET in slots $n_0$, and $n_0$ + 1 are provided by Table 13-12.

- For $\mu$ = 5 and for a candidate SS/PBCH block index $\bar{i}$, the two slots including the associated Type0-PDCCH monitoring occasions are slots $n_0$ and $n_0$ + 4. $M$, $O$, and the index of the first symbol of the CORESET in slots $n_0$ and $n_0$ + 4 are provided by Table 13-12A, where $X$ = 1.25

- For $\mu$ = 6 and for a candidate SS/PBCH block index $\bar{i}$, the two slots including the associated Type0-PDCCH monitoring occasions are slots $n_0$ and $n_0$ + 8. $M$, $O$, and the index of the first symbol of the CORESET in slots $n_0$ and $n_0$ + 8 are provided by Table 13-12A, where $X$ = 0.625.

For operation without shared spectrum channel access and for the SS/PBCH block and CORESET multiplexing patterns 2 and 3, a UE monitors PDCCH in the Type0-PDCCH CSS set over one slot with Type0-PDCCH CSS set periodicity equal to the periodicity of SS/PBCH block. For a SS/PBCH block with index $i$, the UE determines the slot index $n_c$ and SFN$_c$ based on parameters provided by Tables 13-13 through 13-15A.

(continued)

For operation with shared spectrum channel access and for SS/PBCH block and CORESET multiplexing pattern 3, a UE monitors PDCCH in the Type0-PDCCH CSS set over slots that include Type0-PDCCH monitoring occasions associated with SS/PBCH blocks that are quasi co-located with the SS/PBCH block that provides a CORESET for Type0-PDCCH CSS set with respect to average gain, quasi co-location 'typeA' and 'typeD' properties, when applicable. For a candidate SS/PBCH block index $\bar{i}$, where $0 \le \bar{i} \le \bar{L}_{max}$ - 1, the periodicity of the slot including the associated Type0-PDCCH monitoring occasion is same as the periodicity of the candidate SS/PBCH block, and the UE determines the slot index $n_c$ and $SFN_c$ based on parameters provided by Tables 13-15 and 13-15A, where $i$ is replaced by $\bar{i}$ for operation with shared spectrum channel access in FR2-2.

For the SS/PBCH block and CORESET multiplexing patterns 2 and 3, if the active DL BWP is the initial DL BWP, the UE is expected to be able to perform radio link monitoring, as described in clause 5, and measurements for radio resource management [10, TS 38.133] using a SS/PBCH block that provides a CORESET for Type0-PDCCH CSS set.

**Table 13-1: Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz**

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |

| 3 | 1 | 24 | 3 | 0 |
|---|---|----|---|---|
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

(…)

**Table 13-11: Parameters for PDCCH monitoring occasions for Type0-PDCCH CSS set - SS/PBCH block and CORESET multiplexing pattern 1 and FR1**

| Index | $O$ | Number of search space sets per slot | $M$ | First symbol index |
|-------|-----|--------------------------------------|-----|--------------------|
| 0 | 0 | 1 | 1 | 0 |
| 1 | 0 | 2 | 1/2 | $\{0,\text{ if } i \text{ is even}\}$, $\{N_{\text{symb}}^{\text{CORESET}}, \text{ if } i \text{ is odd}\}$ |
| 2 | 2 | 1 | 1 | 0 |
| 3 | 2 | 2 | 1/2 | $\{0,\text{ if } i \text{ is even}\}$, $\{N_{\text{symb}}^{\text{CORESET}}, \text{ if } i \text{ is odd}\}$ |
| 4 | 5 | 1 | 1 | 0 |

| | | | | |
|---|---|---|---|---|
| 5 | 5 | 2 | 1/2 | {0, if $i$ is even}, {$N_{symb}^{CORESET}$, if $i$ is odd} |
| 6 | 7 | 1 | 1 | 0 |
| 7 | 7 | 2 | 1/2 | {0, if $i$ is even}, {$N_{symb}^{CORESET}$, if $i$ is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

(...)

If a UE detects a first SS/PBCH block and determines that a CORESET for Type0-PDCCH CSS set is not present, and for $24 \leq k_{SSB} \leq 29$ FR1 or for $12 \leq k_{SSB} \leq 13$ FR2, the UE may determine the nearest (in the corresponding frequency direction) global synchronization channel number (GSCN) of a second SS/PBCH block having a CORESET for an associated Type0-PDCCH CSS set as $N_{GSCN}^{Reference} + N_{GSCN}^{Size} \cdot N_{GSCN}^{Offset}$. $N_{GSCN}^{Reference}$ is the GSCN of the first SS/PBCH block, $N_{GSCN}^{Size} = 1$ in FR1 and FR2-1, $N_{GSCN}^{Size} = 3$ in FR2-2, and $N_{GSCN}^{Offset}$ is a GSCN offset provided by Table 13-16 for FR1 and Table 13-17 for FR2. If the UE detects the second SS/PBCH block and the second SS/PBCH block does not provide a CORESET for Type0-PDCCH CSS set, as described in clause 4.1, the UE may ignore the information related to GSCN of SS/PBCH block locations for performing cell search.

If a UE detects a SS/PBCH block and determines that a CORESET for Type0-PDCCH CSS set is not present, and for $k_{SSB} = 31$ FR1 or for $k_{SSB} = 15$ for FR2, the UE determines that there is no SS/PBCH block having an associated Type0-PDCCH CSS set within a GSCN range $\left[N_{GSCN}^{Reference} - N_{GSCN}^{Start}, N_{GSCN}^{Reference} + N_{GSCN}^{End}\right]$. $N_{GSCN}^{Start}$ and $N_{GSCN}^{End}$ are respectively determined by *controlResourceSetZero* and *searchSpaceZero* in *pdcch-ConfigSIB1*. If the GSCN range is $\left[N_{GSCN}^{Reference}, N_{GSCN}^{Reference}\right]$, the UE determines that there is no information for a second SS/PBCH block with a CORESET for an associated Type0-PDCCH CSS set on the detected SS/PBCH block.

If a UE does not detect any SS/PBCH block providing a CORESET for Type0-PDCCH CSS set, as described in clause 4.1, within a time period determined by the UE, the UE may ignore the information related to GSCN of SS/PBCH locations in performing cell search.

CORESET#0 and Type0-PDCCH CSS set (e.g., search space#0) may be configured based on pdcch-ConfigSIB1 (controlResourceSetZero and searchSpaceZero) included in the MIB. As an example, 'controlResourceSetZero' may be based on an index representing one of the configurations of the CORESET#0 (e.g., Indices 0 to 15 of 'Table 13-1' in Table 8). As an example, 'searchSpaceZero' may be based on an index representing one of the configurations of the Type0-PDCCH CSS set (e.g., Indices 0 to 15 of 'Table 13-11' in Table 8).

Table 9 below shows i) the MIB and ii) information (pdcch-ConfigSIB1, controlResourceSetZero, and search-SpaceZero) for configuring the CORESET#0 and Type0-PDCCH CSS set.

【Table 9】

| | |
|---|---|
| – | *MIB* |

The *MIB* includes the system information transmitted on BCH.

Signalling radio bearer: N/A

RLC-SAP: TM

Logical channel: BCCH

Direction: Network to UE

**MIB**

-- ASN1START

-- TAG-MIB-START

| MIB ::= | SEQUENCE { |
|---|---|
| systemFrameNumber | BIT STRING (SIZE (6)), |
| subCarrierSpacingCommon | ENUMERATED {scs15or60, scs30or120}, |
| ssb-SubcarrierOffset | INTEGER (0..15), |
| dmrs-TypeA-Position | ENUMERATED {pos2, pos3}, |

| | |
|---|---|
| pdcch-ConfigSIB1 | PDCCH-ConfigSIB1, |
| cellBarred | ENUMERATED {barred, notBarred}, |
| intraFreqReselection | ENUMERATED {allowed, notAllowed}, |
| spare | BIT STRING (SIZE (1)) |

}

-- TAG-MIB-STOP

-- ASN1STOP

| *MIB* field descriptions |
|---|
| ***cellBarred*** |
| Value *barred* means that the cell is barred, as defined in TS 38.304 [20]. This field is ignored by IAB-MT. This field is ignored for connectivity to NTN. |
| ***dmrs-TypeA-Position*** |
| Position of (first) DM-RS for downlink (see TS 38.211 [16], clause 7.4.1.1.2) and uplink (see TS 38.211 [16], clause 6.4.1.1.3). |
| ***intraFreqReselection*** |
| Controls cell selection/reselection to intra-frequency cells when the highest ranked cell is barred, or treated as barred by the UE, as specified in TS 38.304 [20]. This field is ignored by IAB-MT. |
| ***pdcch-ConfigSIB1*** |
| Determines a common *ControlResourceSet* (CORESET), a common search space and necessary PDCCH parameters. If the field *ssb-SubcarrierOffset* indicates that *SIB1* is absent, the field *pdcch-ConfigSIB1* indicates the frequency positions where the UE may |

find SS/PBCH block with *SIB1* or the frequency range where the network does not provide SS/PBCH block with *SIB1* (see TS 38.213 [13], clause 13).

***ssb-SubcarrierOffset***

Corresponds to $k_{SSB}$ (see TS 38.213 [13]), which is the frequency domain offset between SSB and the overall resource block grid in number of subcarriers. (See TS 38.211 [16], clause 7.4.3.1). For operation with shared spectrum channel access in FR1 (see 37.213 [48]), this field corresponds to $\overline{k}_{SSB}$, and $k_{SSB}$ is obtained from $\overline{k}_{SSB}$ (see TS 38.211 [16], clause 7.4.3.1); the LSB of this field is used also for deriving the QCL relation between SS/PBCH blocks as specified in TS 38.213 [13], clause 4.1.

The value range of this field may be extended by an additional most significant bit encoded within PBCH as specified in TS 38.213 [13].

This field may indicate that this cell does not provide *SIB1* and that there is hence no CORESET#0 configured in *MIB* (see TS 38.213 [13], clause 13). In this case, the field *pdcch-ConfigSIB1* may indicate the frequency positions where the UE may (not) find a SS/PBCH with a control resource set and search space for *SIB1* (see TS 38.213 [13], clause 13).

***subCarrierSpacingCommon***

Subcarrier spacing for *SIB1*, Msg.2/4 and MsgB for initial access, paging and broadcast SI-messages. If the UE acquires this *MIB* on an FR1 carrier frequency, the value *scs15or60* corresponds to 15 kHz and the value *scs30or120* corresponds to 30 kHz. If the UE acquires this *MIB* on an FR2 carrier frequency, the value *scs15or60* corresponds to 60 kHz and the value *scs30or120* corresponds to 120 kHz. For operation with shared spectrum channel access in FR1 (see 37.213

[48]) and for operation in FR2-2, the subcarrier spacing for *SIB1*, Msg.2/4 and MsgB for initial access, paging and broadcast SI-messages is same as that for the corresponding SSB. For operation with shared spectrum channel access, this field instead is used for deriving the QCL relation between SS/PBCH blocks as specified in TS 38.213 [13], clause 4.1.

***systemFrameNumber***

The 6 most significant bits (MSB) of the 10-bit System Frame Number (SFN). The 4 LSB of the SFN are conveyed in the PBCH transport block as part of channel coding (i.e. outside the *MIB* encoding), as defined in clause 7.1 in TS 38.212 [17].

–       *PDCCH-ConfigSIB1*

The IE *PDCCH-ConfigSIB1* is used to configure CORESET#0 and search space#0.

**PDCCH-ConfigSIB1 information element**

-- ASN1START

-- TAG-PDCCH-CONFIGSIB1-START

**PDCCH-ConfigSIB1 ::=            SEQUENCE {**

**        controlResourceSetZero            ControlResourceSetZero,**

```
searchSpaceZero                          SearchSpaceZero

}

-- TAG-PDCCH-CONFIGSIB1-STOP

-- ASN1STOP
```

| PDCCH-ConfigSIB1 field descriptions |
| --- |
| *controlResourceSetZero* |
| Determines a common ControlResourceSet (CORESET) with ID #0, see TS 38.213 [13], clause 13. |
| *searchSpaceZero* |
| Determines a common search space with ID #0, see TS 38.213 [13], clause 13. |

–       *ControlResourceSetZero*

The IE *ControlResourceSetZero* is used to configure CORESET#0 of the initial BWP (see TS 38.213 [13], clause 13).

**ControlResourceSetZero information element**

```
-- ASN1START

-- TAG-CONTROLRESOURCESETZERO-START

ControlResourceSetZero ::=                INTEGER (0..15)

-- TAG-CONTROLRESOURCESETZERO-STOP

-- ASN1STOP
```

–       *SearchSpaceZero*

*The IE SearchSpaceZero is used to configure SearchSpace#0 of the initial BWP (see TS 38.213 [13], clause 13).*

**SearchSpaceZero information element**

```
-- ASN1START

-- TAG-SEARCHSPACEZERO-START

SearchSpaceZero ::=                INTEGER (0..15)

-- TAG-SEARCHSPACEZERO-STOP

-- ASN1STOP
```

The eRedCap UE may receive the SIB1 PDSCH by referring to the scheduling information of the SIB1 PDSCH included in the SIB1 DCI (only) if successfully decoding the SIB1 DCI. Specifically, the eRedCap UE may receive the SIB1 PDSCH by referring to the SIB1 PDSCH reception frequency band information in the SIB1 DCI.

For SI transmission method #1, the UE may identify the scheduling information of the SIB1 PDSCH (more specifically, the SIB1 PDSCH transmission frequency band information) only when successfully decoding the SIB1 DCI. The eRedCap UE that reduces only the PDSCH/PUSCH bandwidth is required to perform post-FFT RE buffering for the PDSCH/PUSCH bandwidth and a band exceeding the PDSCH/PUSCH bandwidth for a 'specific period of time'. Specifically, the eRedCap UE is required to perform post-FFT RE buffering for all resource elements (REs) within the CORESET#0 band or all REs within the initial DL BWP containing the CORESET#0 band.

As an example, the specific period of time may mean a time interval including a minimum period of time required for SIB1 DCI decoding. When the UE is required to perform post-FFT RE buffering for REs exceeding the UE PDSCH/PUSCH bandwidth for a specific period of time as described above, the buffer size reduction effect due to reduction in the UE PDSCH/PUSCH bandwidth may be significantly reduced.

In order to prevent the buffer size reduction effect from being reduced as described above, the following embodiments may be additionally considered.

[Method #1-1]

A method for reducing a UE buffer based on a scheduling gap may be considered. Hereinafter, the method will be specifically described.

A method may be considered to limit the SIB1 PDSCH scheduling of the base station so that a scheduling gap of the above-mentioned specific time or greater is continuously guaranteed between the SIB1 PDCCH and the SIB1 PDSCH. In this case, the UE may not expect that the SIB1 PDSCH (a first OFDM symbol transmitting the SIB1 PDSCH) is scheduled within the above-mentioned specific period of time from a last OFDM symbol transmitting the SIB1 PDCCH.

As an example, the base station may transmit the SIB1 PDSCH after the specific period of time (a symbol (s) based on the specific period of time) from the last OFDM symbol in which the SIB1 PDCCH is transmitted. As an example, the UE may receive the SIB1 PDSCH after the specific period of time (a symbol (s) based on the specific period of time) from the last OFDM symbol in which the SIB1 PDCCH is received. As an example, the SIB1 PDSCH may be scheduled to be received after the specific period of time elapsed after the UE receives the SIB1 PDCCH. As an example, the SIB1 PDSCH may be scheduled to be received after the symbol(s) based on the specific period of time from the last symbol in which the UE receives the SIB1 PDCCH.

Such a method may reduce a post-FFT RE buffer size of the UE. That is, since the SIB1 PDSCH is scheduled to be received at a time after decoding of the SIB1 DCI is completed, the UE does not need to perform the post-FFT RE buffering for the band exceeding the PDSCH/PUSCH bandwidth

According to Method #1-1, a value(s) determined/indicated by a time domain resource assignment (TDRA) field of the SIB1 DCI may be defined in advance as satisfying a specific condition(s).

Specifically, i) slot offset (K0), ii) start symbol (S), and iii) allocation length in symbols (L) may be determined based on the TDRA field of the SIB1 DCI. For example, the TDRA field may indicate one of the Row indices 1 to 16 based on Table 10 below.

【Table 10】

| Table 5.1.2.1.1-2: Default PDSCH time domain resource allocation A for normal CP | | | | | |
|---|---|---|---|---|---|
| Row index | *dmrs-TypeA-Position* | PDSCH mapping type | $K_0$ | S | L |
| 1 | 2 | Type A | 0 | 2 | 12 |
| | 3 | Type A | 0 | 3 | 11 |

| | | | | | |
|---|---|---|---|---|---|
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

The UE may not expect that a combination of all or some of i) the slot offset (K0), ii) the start symbol(s), and iii) the allocation length in symbols (L) above or a specific value (e.g., K0 or S) does not satisfy some or all of 'specific conditions' below.

As an example, the K0 may be an offset (e.g., slot(s)) between a slot of the DCI and a slot of the PDSCH. The S may be a starting symbol in the slot of the PDSCH. Specifically, a PDCCH to PDSCH scheduling gap may be a time interval corresponding to a slot(s) (symbols based on the slot(s)) based on the KO and a symbol(s) prior to the starting symbol in the slot of the PDSCH. For example, assuming that the number of symbols in the slot is 14, the PDCCH to PDSCH scheduling gap may be defined/interpreted as KO * 14 + S. In other words, the PDCCH to PDSCH scheduling gap may be defined/interpreted as the number of symbols based on the KO and the S.

As described above, the SIB1 PDCCH to SIB1 PDSCH scheduling gap may be determined/indicated based on the K0 and the S.

As an example, the specific conditions may be as follows.

- The SIB1 PDCCH to SIB1 PDSCH scheduling gap determined/indicated based on K0 and S must be greater than (or greater than or equal to) the SIB1 DCI decoding time or a specific time defined above.
- When the SIB1 PDCCH to SIB1 PDSCH scheduling gap determined/indicated based on K0 and S must be smaller than (or smaller than or equal to) the SIB1 DCI decoding time or the specific time defined above, the difference must be smaller than (or smaller than or equal to) X. X is an OFDM symbol interval unit, or a value acquired by dividing the difference by L must be smaller than (or smaller than or equal to) a specific value Y. X and Y values may be defined for each SCS.

For Method #1-1, when the specific condition is satisfied, the post-FFT RE buffering may not be required until SIB1 DCI decoding is completed, or the post-FFT RE buffering may be required only for the UE PDSCH/PUSCH band.

[Method #1-2]

A buffer reduction method based on the UE operation may be considered. Hereinafter, the buffer reduction method will be specifically described.

According to the embodiment, there is no restriction on a network configuration in terms of the SIB1 PDSCH configuration (e.g., Method #1-1), but the UE may not perform SIB1 reception during the specific period of time. At this time, since the above-described operation may cause the SIB1 reception performance to deteriorate, the following operation may be considered with respect to SIB1 reception coverage. Considering the (reduced) SIB1 reception coverage, the base station may indicate a modulation and coding scheme (MCS) field through the SIB1 DCI. As a specific example, a modulation order determined based on the MCS field of the SIB1 DCI may be higher than that of a general UE (non-RedCap UE).

The values required to implement Method #1, Method #1-1, and Method #1-2 (UE PDSCH/PUSCH bandwidth, specific period of time, scheduling gap, specific conditions (related parameter values), etc.) may be defined in advance between the UE and the base station.

[Method #2]

The base station may transmit the SIB1 PDSCH by determining the transmission frequency band of the SIB1 PDSCH in a predefined method. The UE may receive the SIB1 PDSCH after determining the SIB1 PDSCH reception frequency band by assuming the same method.

Specifically, the UE may determine the SIB1 PDSCH reception frequency band as follows, regardless of the time of completion of the SIB1 DCI decoding. When receiving the SIB1 PDSCH by the predefined method, the UE may determine the SIB1 PDSCH reception frequency band by the predefined method at least before the time of receiving the first OFDM symbol in which the SIB1 PDSCH is transmitted. Accordingly, the UE may not require THE post-FFT RE buffering outside of the SIB1 PDSCH reception frequency band determined in the method.

As a detailed proposal for implementing Method #2, the following methods are proposed based on the predefined methods mentioned above.

[Method #2-1]

A method for determining the SIB1 PDSCH reception frequency band based on CORESET#0 may be considered. Hereinafter, the method will be specifically described.

The base station may transmit the SIB1 PDSCH by determining the transmission frequency band of the SIB1 PDSCH based on the location of the frequency band of CORESET#0. In this case, the UE determines the SIB1 PDSCH reception frequency band based on the location of the frequency band of CORESET#0. The UE may receive the SIB1 PDSCH by post-FFT RE buffering only REs belonging to the corresponding frequency band.

For Method #2-1, the SIB1 PDSCH reception frequency band may be determined at a time when the UE acquires CORESET#0 band information (i.e., a time when MIB decoding is completed). It is possible to determine the SIB1 PDSCH reception frequency band before the SIB1 PDSCH reception time. Therefore, it is possible to reduce a post-FFT RE buffer required for reception of the SIB1 PDSCH.

[Based on lowest (or highest) RB index of CORESET#0]

The (location of) frequency band for the SIB1 PDSCH may be determined based on the lowest (or highest) RB index of CORESET#0. For example, the lowest (or highest) RB index of the CORESET#0 may be related to a first RB, a center RB, or a last RB based on the RB index of the frequency band for reception of the SIB1 PDSCH. As a specific example, the UE may determine, as the frequency band for reception of the SIB1 PDSCH, the UE PDSCH/PUSCH bandwidth in ascending (or descending) order of the RB index from the lowest (or highest) RB of the CORESET#0.

[Based on center frequency of CORESET#0]

The (location of) frequency band for the SIB1 PDSCH may be determined based on the center frequency of the CORESET#0. For example, the center frequency of the CORESET#0 may be related to the first RB or the last RB based on the RB index of the frequency band for reception of the SIB1 PDSCH. As a specific example, the UE may determine, as the SIB1 PDSCH reception band, the UE PDSCH/PUSCH bandwidth based on the center frequency of the CORESET#0.

In Method #2-1 and detailed proposals, the CORESET#0 may be replaced with an initial DL BWP.

[Method #2-2]

A method for determining the SIB1 PDSCH reception frequency band based on the SSB may be considered. Hereinafter, the method will be specifically described.

The base station may transmit the SIB1 PDSCH by determining the transmission frequency band of the SIB1 PDSCH based on a location of a frequency band of the SSB. In this case, the UE determines the SIB1 PDSCH reception frequency band based on the location of the frequency band of the SSB. The UE may perform the post-FFT RE buffering only for REs belonging to the corresponding frequency band.

For Method #2-2, as in Method #2-1, the SIB1 PDSCH reception frequency band may be determined at the time of completion of the MIB decoding of the UE, and it is possible to determine the SIB1 PDSCH reception frequency band before the time of receiving the SIB1 PDSCH. Therefore, it is possible to reduce the post-FFT RE buffer required for reception of the SIB1 PDSCH.

[Based on lowest (or highest) RB index of SSB]

The (location of) frequency band for the SIB1 PDSCH may be determined based on the lowest (or highest) RB index of the SSB. For example, the UE may determine, as the SIB1 PDSCH reception band, a UE PDSCH/PUSCH bandwidth in ascending (or descending) order of the RB index from a lowest (or highest) RB of a CORESET#0 band overlaps in whole or in part with the lowest (or highest) RB of the SSB.

[Based on center frequency of SSB]

The (location of) frequency band for the SIB1 PDSCH may be determined based on a center frequency of the SSB. For example, the UE may determine, as the SIB1 PDSCH reception band, the UE PDSCH/PUSCH bandwidth based on the center frequency of the SSB.

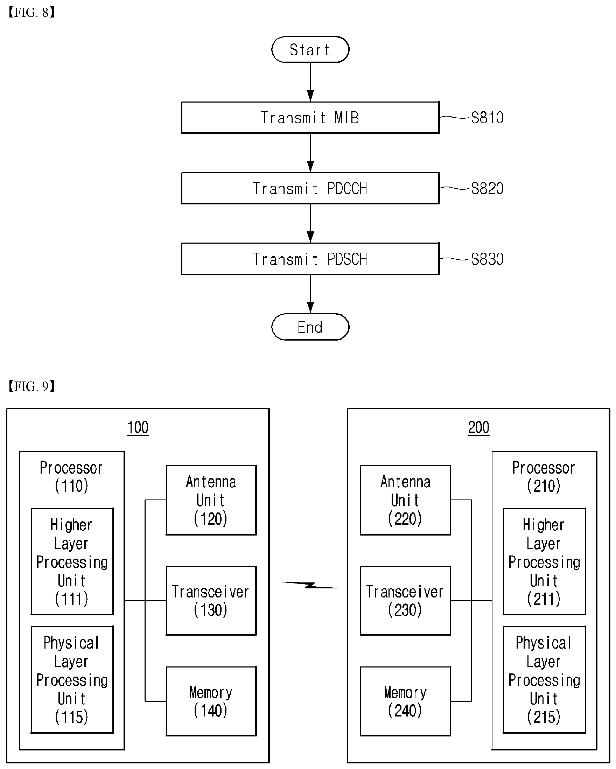

In terms of implementation, the operations of the base station/UE according to the embodiments described above (e.g., operations based on at least one of Method #1-1, Method #1-2, Method #2-1, and Method #2-2) may be processed by devices in FIG. 9 described below (e.g., processors 110 and 210 in FIG. 9).

Further, the operations of the base station/UE according to the embodiments (e.g., operations described above (e.g., operations based on at least one of Method #1-1, Method #1-2, Method #2-1, and Method #2-2) may be stored in memories (e.g., 140 and 240 in FIG. 9) in the form of commands/programs (e.g., instructions and executable codes) for driving at least one processor (e.g., 110 and 210 in FIG. 9).

Hereinafter, the embodiments described above will be described in detail with reference to FIGS. 7 and 8 in terms of the operations of the UE and the base station. Methods to be described below are just distinguished for convenience and it is needless to say that some components of any one method may be substituted with some components of another method or may be applied in combination with each other.

FIG. 7 is a flowchart for describing a method performed by a user equipment (UE) according to an embodiment of the present disclosure.

Referring to FIG. 7, a method performed by a UE in a wireless communication system according to an embodiment of the present disclosure includes an MIB receiving step S710, a PDCCH receiving step S720, and a PDSCH receiving step S730.

In S710, the UE receives a master information block (MIB) from a base station. The MIB may include information based on Table 9. For example, the MIB may include information related to CORESET and Type0-PDCCH CSS set.

In S720, the UE may receive, from the base station, a physical downlink control channel (PDCCH) based on the MIB.

For example, a control resource set (CORESET) (e.g., CORESET#0 and a search space (e.g., Type0-PDCCH Common Search Space (CSS) set) may be configured based on the MIB. The UE may receive the PDCCH based on the CORESET and the search space (see the description related to Tables 8 to 10).

The PDCCH may be related to downlink control information (DCI) for scheduling a physical downlink shared channel (PDSCH). In other words, the UE may receive the PDCCH carrying the DCI.

In step S730, the UE receives the PDSCH from the base station.

The PDSCH may related to system information block 1 (SIB1). In other words, the PDSCH may be a PDSCH that carries the SIB1. The PDSCH may mean an SIB1 PDSCH in Method #1 and Method #2.

According to an embodiment, the UE may be the enhanced reduced capability UE (eRedCap UE) described above. Specifically, i) a first bandwidth related to a control channel and ii) a second bandwidth related to a shared channel may be supported by the UE. The second bandwidth may be smaller than the first bandwidth. As an example, the second bandwidth may be 5 MHz, and the first bandwidth may be 20 MHz.

As described above, since the bandwidth supported by the UE for receiving the PDSCH (the second bandwidth) is reduced compared to the bandwidth supported by the UE for receiving the PDCCH (the first bandwidth), the post-FFT RE buffering described above may also be required for resource elements (REs) within an area exceeding (the size of) the second bandwidth for receiving the PDSCH. In this case, UE implementation complexity (implementation complexity of eRedCap UE) may increase.

Therefore, a frequency band related to the PDSCH (i.e., a location of a frequency band for receiving/transmitting the PDSCH) needs to be determined. In this regard, embodiments based on Method #1 and Method #2 may be considered.

Specifically, the frequency band related to the PDSCH may be determined based on i) the DCI, ii) a control resource set (CORESET) configured based on the MIB, or iii) a synchronization signal/physical broadcast channel block (SSB).

As an example, based on the frequency band related to the PDSCH being determined based on the DCI: the PDSCH may be received at a time after a time gap from a time of receiving the PDCCH. The embodiment may be based on Method #1-1 or Method #1-2. The time gap includes a time for decoding the DCI.

According to an embodiment, the DCI may include a time domain resource assignment field. A slot offset K0 and a starting symbol S may be determined based on the time domain resource assignment field. A time interval based on the slot offset K0 and the starting symbol S may be larger than or equal to the time gap. The embodiment may be based on Method #1-1.

The K0 may represent a number of slots between a slot related to the DCI and a slot related to the PDSCH. The S may represent an index of a first symbol related to the PDSCH in the slot related to the PDSCH. As an example, the time interval based on the slot offset K0 and the starting symbol S may mean a time interval including symbols based on K0 slots and ii) S symbols.

The DCI may include information for the frequency band related to the PDSCH.

According to an embodiment, the UE may not perform an operation related to reception of the SIB1 during the time gap from the time of receiving the PDCCH. The embodiment may be based on Method #1-2.

According to an embodiment, the frequency band related to the PDSCH may be determined based on the CORESET. Specifically, the frequency band related to the PDSCH may be determined based on i) a resource block (RB) of the CORESET or ii) a center frequency of the CORESET. The embodiment may be based on Method #2-1.

The RB may be an RB with a highest RB index or a lowest RB index among RBs related to the CORESET. As an example, the RBs related to the CORESET may mean RBs included in the CORESET in a frequency domain.

According to an embodiment, the frequency band related to the PDSCH may be determined based on the SSB. Specifically, the frequency band related to the PDSCH is determined based on a resource block (RB) of the SSB or a center frequency of the SSB. The embodiment may be based on Method #2-2.

The RB may be an RB with a highest RB index or a lowest RB index among RBs related to the SSB. As an example, the RBs related to the SSB may mean RBs included in the SSB in the frequency domain.

The operations based on S710 to S730 described above may be implemented by the device in FIG. 9. For example, the UE 200 may control one or more transceivers 230 and/or one or more memories 240 to perform the operations based on S710 to S730.

Hereinafter, the embodiments described below will be specifically described in terms of the operation of the base station.

S810 to S830 described below correspond to S710 to S730 described in FIG. 7. By considering the correspondence relationship, redundant descriptions are omitted. That is, a specific description of a BS operation described below may be replaced with the description/example of FIG. 7 corresponding to the operation. As an example, the description/embodiment of S710 to S730 in FIG. 7 may be additionally applied to the base station operations of S810 and S820 to be described below.

FIG. 8 is a flowchart for describing a method performed by a base station according to another embodiment of the present disclosure.

Referring to FIG. 8, a method performed by a base station in a wireless communication system according to another embodiment of the present disclosure includes an MIB transmitting step S810, a PDCCH transmitting step S820, and a PDSCH transmitting step S830.

In S810, the base station transmits a master information block (MIB) to the UE.

In S820, the base station transmits, to the UE, a physical downlink control channel (PDCCH) based on the MIB. The PDCCH may be related to downlink control information (DCI) for scheduling a physical downlink shared channel (PDSCH).

In S830, the base station transmits the PDSCH to the UE.

The operations based on S810 to S830 described above may be implemented by the device in FIG. 9. For example, the base station 100 may control one or more transceivers 130 and/or one or more memories 140 to perform the operations based on S810 to S830.

A device to which an embodiment of the present disclosure is applicable (a device implementing the method/operation according to an embodiment of the present disclosure) is described below with reference to FIG. 9.

FIG. 9 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) in a wireless communication system, the method comprising:

   receiving, from a base station, a master information block (MIB),
   receiving, from the base station, a physical downlink control channel (PDCCH) based on the MIB,
   wherein the PDCCH is related to downlink control information (DCI) for scheduling a physical downlink shared channel (PDSCH), and
   receiving the PDSCH from the base station,
   wherein the PDSCH is related to system information block 1 (SIB1),
   wherein i) a first bandwidth related to a control channel and ii) a second bandwidth related to a shared channel are supported by the UE,
   wherein the second bandwidth is smaller than the first width, and
   wherein a frequency band related to the PDSCH is determined based on i) the DCI, ii) a control resource set (CORESET) configured based on the MIB, or iii) a synchronization signal/physical broadcast channel block (SSB).

2. The method of claim 1, wherein based on the frequency band related to the PDSCH being determined based on the DCI:
   the PDSCH is received at a time after a time gap from a time of receiving the PDCCH.

3. The method of claim 2, wherein the time gap includes a time for decoding the DCI.

4. The method of claim 3, wherein the DCI includes a time domain resource assignment field,

   wherein a slot offset K0 and a starting symbol S are determined based on the time domain resource assignment field, and
   wherein a time interval based on the slot offset K0 and the starting symbol S is larger than or equal to the time gap.

5. The method of claim 4, wherein the K0 represents a number of slots between a slot related to the DCI and a slot related to the PDSCH, and
   wherein the S represents an index of a first symbol related to the PDSCH in the slot related to the PDSCH.

6. The method of claim 2, wherein the UE does not perform an operation related to reception of the SIB1 during the time gap from the time of receiving the PDCCH.

7. The method of claim 1, wherein the frequency band related to the PDSCH is determined based on i) a resource block (RB) of the CORESET or ii) a center frequency of the CORESET.

8. The method of claim 7, wherein the RB is an RB with a highest RB index or a lowest RB index among RBs related to the CORESET.

9. The method of claim 1, wherein the frequency band related to the PDSCH is determined based on a resource block (RB) of the SSB or a center frequency of the SSB.

10. The method of claim 9, wherein the RB is an RB with a highest RB index or a lowest RB index among RBs related to the SSB.

11. The method of claim 2, wherein the DCI includes information for the frequency band related to the PDSCH.

12. A user equipment (UE) operating in a wireless communication system, the UE comprising:

    one or more transceivers,
    one or more processors; and
    one or more memories operably connectable to the one or more processors, and storing instructions of configuring the one or more processors to perform operations based on being executed by the one or more processors,
    wherein the operations include

receiving a master information block (MIB) from a base station,

receiving, from the base station, a physical downlink control channel (PDCCH) based on the MIB,

wherein the PDCCH is related to downlink control information (DCI) for scheduling a physical downlink shared channel (PDSCH), and

receiving the PDSCH from the base station,

wherein the PDSCH is related to system information block 1 (SIB1),

wherein i) a first bandwidth related to a control channel and ii) a second bandwidth related to a shared channel are supported by the UE,

wherein the second bandwidth is smaller than the first width, and

wherein a frequency band related to the PDSCH is determined based on i) the DCI, ii) a control resource set (CORESET) configured based on the MIB, or iii) a synchronization signal/physical broadcast channel block (SSB).

13. A device comprising: one or more memories and one or more processors functionally connected to the one or more memories,

wherein the one or more memories include instructions of configuring the one or more processors to perform operations based on being executed by the one or more processors, and

wherein the operations include

receiving a master information block (MIB) from a base station,

receiving, from the base station, a physical downlink control channel (PDCCH) based on the MIB,

wherein the PDCCH is related to downlink control information (DCI) for scheduling a physical downlink shared channel (PDSCH), and

receiving the PDSCH from the base station,

wherein the PDSCH is related to system information block 1 (SIB1),

wherein i) a first bandwidth related to a control channel and ii) a second bandwidth related to a shared channel are supported by a user equipment (UE),

wherein the second bandwidth is smaller than the first width, and

wherein a frequency band related to the PDSCH is determined based on i) the DCI, ii) a control resource set (CORESET) configured based on the MIB, or iii) a synchronization signal/physical broadcast channel block (SSB).

14. One or more non-transitory computer-readable media storing one or more instructions, wherein one or more instructions executable by one or more processors configure the one or more processors to perform operations, and

wherein the operations include

receiving a master information block (MIB) from a base station,

receiving, from the base station, a physical downlink control channel (PDCCH) based on the MIB,

wherein the PDCCH is related to downlink control information (DCI) for scheduling a physical downlink shared channel (PDSCH), and

receiving the PDSCH from the base station,

wherein the PDSCH is related to system information block 1 (SIB1),

wherein i) a first bandwidth related to a control channel and ii) a second bandwidth related to a shared channel are supported by a user equipment (UE),

wherein the second bandwidth is smaller than the first width, and

wherein a frequency band related to the PDSCH is determined based on i) the DCI, ii) a control resource set (CORESET) configured based on the MIB, or iii) a synchronization signal/physical broadcast channel block (SSB).

15. A method performed by a base station in a wireless communication system, the method comprising:

transmitting a master information block (MIB) to a user equipment (UE);

transmitting, to the UE, a physical downlink control channel (PDCCH) based on the MIB,

wherein the PDCCH is related to downlink control information (DCI) for scheduling a physical downlink shared channel (PDSCH); and

transmitting the PDSCH to the UE,

wherein the PDSCH is related to system information block 1 (SIB1),

wherein i) a first bandwidth related to a control channel and ii) a second bandwidth related to a shared channel are

31

supported by the UE,

wherein the second bandwidth is smaller than the first width, and

wherein a frequency band related to the PDSCH is determined based on i) the DCI, ii) a control resource set (CORESET) configured based on the MIB, or iii) a synchronization signal/physical broadcast channel block (SSB).

16. A base station operating in a wireless communication system, the base station comprising:

one or more transceivers;

one or more processors; and

one or more memories operably connectable to the one or more processors, and storing instructions of configuring the one or more processors to perform operations based on being executed by the one or more processors,

wherein the operations include

transmitting a master information block (MIB) to a user equipment (UE),

transmitting, to the UE, a physical downlink control channel (PDCCH) based on the MIB,

wherein the PDCCH is related to downlink control information (DCI) for scheduling a physical downlink shared channel (PDSCH), and

transmitting the PDSCH to the UE,

wherein the PDSCH is related to system information block 1 (SIB1),

wherein i) a first bandwidth related to a control channel and ii) a second bandwidth related to a shared channel are supported by the UE,

wherein the second bandwidth is smaller than the first width, and

wherein a frequency band related to the PDSCH is determined based on i) the DCI, ii) a control resource set (CORESET) configured based on the MIB, or iii) a synchronization signal/physical broadcast channel block (SSB).

【FIG. 1】

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

【FIG. 2】

1 subframe =
$14 \cdot 2^{\mu}$ OFDM symbols

$k=N^{size,\mu}_{grid}N^{RB}_{sc}-1$

$N^{size,\mu}_{grid}N^{RB}_{sc}$ subcarriers

1 resource block = $N^{RB}_{sc}$ subcarriers

Resource element(k,l)

k=0

l=0

$l=14 \cdot 2^{\mu}-1$

【FIG. 3】

INITIAL
CELL
SEARCH

SYSTEM
INFORMATION
RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S201   S202   S203   S204   S205   S206   S207   S208

· DL/UL ACK/NACK
· UE CQI/PMI RI REPORT
  USING PUSCH AND PUCCH

【FIG. 4】

Subcarrier
Number

239
192
182
56
47
0

PSS   PBCH   SSS   PBCH   PBCH

0   1   2   3

OFDM symbol number

【FIG. 5】

SSB periodicity(default:20ms)

5ms window

SSB#1   SSB#2   · · ·   SSB#L

SSB burst set

【FIG. 6】

UE                                    BS

MasterInformationBlock

SystemInformationBlockType1

System Information Request

SystemInformation messages

【FIG. 7】

Start

Receive MIB —— S710

Receive PDCCH —— S720

Receive PDSCH —— S730

End

【FIG. 8】

```
        ┌─────────┐
        │  Start  │
        └────┬────┘
             │
             ▼
   ┌───────────────────┐
   │   Transmit MIB    │─── S810
   └─────────┬─────────┘
             │
             ▼
   ┌───────────────────┐
   │   Transmit PDCCH  │─── S820
   └─────────┬─────────┘
             │
             ▼
   ┌───────────────────┐
   │   Transmit PDSCH  │─── S830
   └─────────┬─────────┘
             │
             ▼
        ┌─────────┐
        │   End   │
        └─────────┘
```

【FIG. 9】

## INTERNATIONAL SEARCH REPORT

| | International application No. |
|---|---|
| | **PCT/KR2023/014369** |

| A. | CLASSIFICATION OF SUBJECT MATTER |
|---|---|

**H04W 48/10**(2009.01)i; **H04W 72/232**(2023.01)i; **H04W 72/04**(2009.01)i

According to International Patent Classification (IPC) or to both national classification and IPC

| B. | FIELDS SEARCHED |
|---|---|

Minimum documentation searched (classification system followed by classification symbols)

H04W 48/10(2009.01); H04W 48/08(2009.01); H04W 48/12(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDSCH, 대역폭(bandwidth), 제어 자원 세트(COntrol REsource SET, CORESET), SSB, 시간 갭(time gap), 감소된 성능(reduced capability, RedCap), post-FFT RE buffering, 시스템 정보 블록 1(System Information Block 1, SIB1)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | INTEL CORPORATION. On solutions to further reduce UE complexity. R1-2206593, 3GPP TSG-RAN WG1 Meeting #110. Toulouse, France. 12 August 2022.<br>See sections 5-6. | 1,7-10,12-16<br>2-6,11 |
| Y | WO 2022-080922 A1 (LG ELECTRONICS INC.) 21 April 2022 (2022-04-21)<br>See paragraph [0413]; and claims 1 and 4-7. | 1,7-10,12-16 |
| A | ZTE et al. Discussion on eRedCap UE complexity reduction. R1-2207057, 3GPP TSG RAN WG1 #110. Toulouse, France. 12 August 2022.<br>See section 2.1. | 1-16 |
| A | MODERATOR (ERICSSON). FL summary #8 on potential solutions to further reduce RedCap UE complexity. R1-2208287, 3GPP TSG-RAN WG1 Meeting #110. Toulouse, France. 07 September 2022.<br>See sections 7.2.2 and 7.3.2. | 1-16 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 January 2024** | **10 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/014369** |

**C.  DOCUMENTS CONSIDERED TO BE RELEVANT**

| Category* | Citation of document, with indication, where appropriate, of the relevant passages | Relevant to claim No. |
|---|---|---|
| A | KR 10-2021-0130653 A (SAMSUNG ELECTRONICS CO., LTD.) 01 November 2021 (2021-11-01)<br>See claims 1-9. | 1-16 |

Form PCT/ISA/210 (second sheet) (July 2022)

**INTERNATIONAL SEARCH REPORT**
Information on patent family members

International application No.

**PCT/KR2023/014369**

| Patent document cited in search report | | | Publication date (day/month/year) | Patent family member(s) | | | Publication date (day/month/year) |
|---|---|---|---|---|---|---|---|
| WO | 2022-080922 | A1 | 21 April 2022 | KR | 10-2023-0087450 | A | 16 June 2023 |
| KR | 10-2021-0130653 | A | 01 November 2021 | CN | 113543279 | A | 22 October 2021 |
| | | | | CN | 113630844 | A | 09 November 2021 |
| | | | | DE | 102021109980 | A1 | 21 October 2021 |
| | | | | DE | 102021109981 | A1 | 21 October 2021 |
| | | | | KR | 10-2021-0130654 | A | 01 November 2021 |
| | | | | TW | 202142031 | A | 01 November 2021 |
| | | | | TW | 202143773 | A | 16 November 2021 |
| | | | | US | 2021-0328700 | A1 | 21 October 2021 |
| | | | | US | 2021-0329718 | A1 | 21 October 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical channels and modulation. *3GPP TS 38.211*
- Multiplexing and channel coding. *3GPP TS 38.212*
- Physical layer procedures for control. *3GPP TS 38.213*
- Physical layer procedures for data. *3GPP TS 38.214*
- Physical layer measurements. *3GPP TS 38.215*
- NR and NG-RAN Overall Description. *3GPP TS 38.300*
- User Equipment (UE) procedures in idle mode and in RRC inactive state. *3GPP TS 38.304*
- Medium Access Control (MAC) protocol. *3GPP TS 38.321*
- Radio Link Control (RLC) protocol. *3GPP TS 38.322*
- Packet Data Convergence Protocol (PDCP). *3GPP TS 38.323*
- Radio Resource Control (RRC) protocol. *3GPP TS 38.331*
- Service Data Adaptation Protocol (SDAP). *3GPP TS 37.324*
- Multi-connectivity; Overall description. *3GPP TS 37.340*
- Application layer support for V2X services; Functional architecture and information flows. *3GPP TS 23.287*
- System Architecture for the 5G System. *3GPP TS 23.501*
- Procedures for the 5G System. *3GPP TS 23.502*
- Policy and Charging Control Framework for the 5G System. *3GPP TS 23.503*
- Non-Access-Stratum (NAS) protocol for 5G System (5GS). *3GPP TS 24.501*
- Access to the 3GPP 5G Core Network (5GCN) via non-3GPP access networks. *3GPP TS 24.502*
- User Equipment (UE) policies for 5G System (5GS). *3GPP TS 24.526*